(19)

Europäisches
Patentamt
European
Patent Office
Office européen
des brevets

(11) **EP 4 722 978 A1**

(12) **EUROPEAN PATENT APPLICATION**

(43) Date of publication:
**08.04.2026 Bulletin 2026/15**

(21) Application number: **25206193.2**

(22) Date of filing: **01.10.2025**

(51) International Patent Classification (IPC):
***G06N 3/045*** *(2023.01)*

(52) Cooperative Patent Classification (CPC):
**G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.10.2024 US 202463702137 P**

(71) Applicant: **GDM Holding LLC
Mountain View, CA 94043 (US)**

(72) Inventors:
• **FISCH, Adam Joshua
London, N1C 4AG (GB)**

• **SCHUSTER, Tal
Mountain View, 94043 (US)**
• **HARUTYUNYAN, Hrayr
Mountain View, 94043 (US)**
• **JI, Ziwei
Mountain View, 94043 (US)**
• **KIM, Seungyeon
Mountain View, 94043 (US)**
• **BAE, Sangmin
Mountain View, 94043 (US)**

(74) Representative: **Marks & Clerk GST
1 New York Street
Manchester M1 4HD (GB)**

(54) **EFFICIENT DECODING OF OUTPUT SEQUENCES USING PARAMETER SHARING**

(57)    Methods, systems, and apparatus, including computer programs encoded on computer storage media, for performing a machine learning task. One of the methods includes generating an output sequence by, at each of a plurality of output time steps: generating a current input sequence from at least the tokens at output time steps that precede the output time step in the output sequence; generating a respective embedding for each input in the current input sequence; and processing the respective embeddings for the inputs in the current input sequence through one or more layer blocks in the sequence of layer blocks until a termination criterion is satisfied.

NETWORK INPUT 102

TASK PERFORMANCE SYSTEM 100

INPUT SEQUENCE 104

NEURAL NETWORK
110

TERMINATION
CRITERION 106

LAYER BLOCKS 120a-b

SELF-ATTENTION
LAYERS 122a-k

FIG. 1

OUTPUT SEQUENCE 130

EP 4 722 978 A1

**Description**

CROSS-REFERENCE TO RELATED APPLICATIONS

This application claims priority to U.S. Provisional Application No. 63/702,137 filed on October 1, 2024. The disclosure of the prior application is considered part of and is incorporated by reference in the disclosure of this application.

BACKGROUND

This specification relates to processing inputs using neural networks to generate output sequences.

Neural networks are machine learning models that employ one or more layers of nonlinear units to predict an output for a received input. Some neural networks include one or more hidden layers in addition to an output layer. The output of each hidden layer is used as input to the next layer in the network, i.e., another hidden layer or the output layer. Each layer of the network generates an output from a received input in accordance with current values of a respective set of parameters.

SUMMARY

This specification describes a system implemented as computer programs on one or more computers in one or more locations that performs a machine learning task on a network input using a neural network.

According to one aspect there is provided a method performed by one or more computers and for auto-regressively generating, using a neural network, an output sequence that includes a respective token from a vocabulary of tokens at each of a plurality of output time steps, wherein the neural network comprises a sequence of layer blocks that each comprise a sequence of self-attention layers that includes a respective self-attention layer at each of a plurality of positions in the sequence of layers, and wherein, for each position of the plurality of positions, the respective self-attention layers at the position in each of the layer blocks share a first set of weights, wherein the neural network is configured to: receive a respective embedding for each input in an input sequence comprising a respective input at each of one or more input positions, process the respective embeddings for the inputs in the input sequence through each layer block to generate a respective output embedding for each input in the input sequence, wherein each respective self-attention layer in each layer block is configured to: obtain data derived from a respective input embedding for each input in the input sequence, and generate a respective output embedding for at least a last input in the input sequence at least in part by applying an attention mechanism using the data derived from the respective input embeddings; and the output embedding for the last input in the input sequence to generate a probability distribution over the tokens in the vocabulary, and wherein the method comprises: generating the output sequence by, at each of the plurality of output time steps: generating a current input sequence from at least the tokens at output time steps that precede the output time step in the output sequence; generating a respective embedding for each input in the current input sequence; processing the respective embeddings for the inputs in the current input sequence through one or more layer blocks in the sequence of layer blocks until a termination criterion is satisfied, comprising, for each of the one or more layer blocks starting from the first layer block in the sequence and until the termination criterion is satisfied: for each self-attention layer in the layer block: obtaining data derived from a respective input embedding for the respective self-attention layer for each input in the current input sequence, and generate a respective output embedding for at least a last input in the current input sequence at least in part by applying an attention mechanism using the data derived from the respective input embeddings; determining whether the termination criterion is satisfied; in response to determining that the termination criterion is satisfied, processing the output embedding for the last input in the current input sequence generated by the respective self-attention layer at a last position in the layer block at which the termination criterion is satisfied to generate a probability distribution over the tokens in the vocabulary; and selecting the token at the output time step using the probability distribution.

In some implementations, the first set of weights for each self-attention layer comprises any one or more of: a key-value weight matrix, a query weight matrix, an output projection matrix, and a feed-forward weight matrix.

In some implementations, each self-attention layer of each layer block comprises a respective second set of weights.

In some implementations, the respective second set of weights for each self-attention layer of each layer block comprises a different respective set of weights.

In some implementations, the respective second set of weights for each self-attention layer comprises one or more weight update matrices which are combined with one or more weight matrices of the first set of weights for the self-attention layer.

In some implementations, each respective second set of weights has been learned by training the neural network on a plurality of training examples, comprising training each respective second set of weights while holding the respective first sets of weights fixed.

In some implementations, training each respective second set of weights comprises training a respective lower-rank approximation of weights representative of updates to the neural network.

In some implementations, training the respective lower-rank approximation of weights comprises: identifying a set of target update weights comprising a subset of weights of the first set of weights for the respective self-attention layer; receiving a target rank specifying a dimensionality of the respective lower-rank approximation of weights; representing an update approximation for training updates to the target update weights using matrix decomposition in accordance with the target rank, wherein the matrix decomposition comprises a first matrix and a second matrix, each comprising values derived from a singular value decomposition of the respective first set of weights and a corresponding pre-trained set of weights; updating the first and second matrix by training with a plurality of training examples to perform gradient updates in accordance with an objective function; and generating an approximation of the target update weights using the respective lower-rank approximation of weights as the respective second set of weights.

In some implementations, the first matrix comprises values derived from right singular vectors of the singular value decomposition, and wherein the second matrix comprises values derived from left singular vectors and singular values of the singular value decomposition.

In some implementations, the first set of weights for each respective self-attention layer in each layer block is derived from one or more sets of weights for respective layers of a pre-trained neural network.

In some implementations, the first set of weights for each respective self-attention layer in each layer block is initialized by combining two or more sets of weights for respective layers of the pre-trained neural network.

In some implementations, the first set of weights for each respective self-attention layer in each layer block is initialized from a set of weights for a respective single layer of a pre-trained neural network.

In some implementations, the first set of weights for the respective self-attention layer at a last position in each layer block is initialized from a set of weights for a last layer of the pre-trained neural network, and wherein the first set of weights for respective self-attention layers at one or more preceding positions is initialized from one or more sets of weights for respective single layers of the pre-trained neural network at a predetermined interval.

In some implementations, the output sequence is conditioned on a network input, and wherein the method further comprises receiving the network input.

In some implementations, the current input sequence further comprises one or more inputs corresponding to the network input.

In some implementations, the output sequence generated using the neural network is one of a plurality of output sequences being generated by the neural network in parallel according to a maximum batch size, and wherein the neural network is further configured to: while processing the respective embeddings for the inputs in respective current input sequences for the plurality of output sequences through each layer block after the first layer block until a termination criterion is satisfied, processing respective second embeddings for second inputs in respective second current input sequences for a second plurality of output sequences through each preceding layer block to generate a respective second output embedding for each second input, wherein the second plurality of output sequences comprises a number of output sequences such that a total number of input sequences being processed by the layer blocks is less than or equal to the maximum batch size.

In some implementations, the second plurality of output sequences is part of a larger set of output sequences.

In some implementations, the method further comprises: in response to determining that the termination criterion is satisfied for one or more of the current input sequences, refraining from processing the respective embeddings for the inputs in the one or more current input sequences in subsequent layer blocks; and processing respective third embeddings for third inputs in respective third current input sequences for a third plurality of output sequences through each preceding layer block to generate a respective third output embedding for each third input, wherein the third plurality of output sequences comprises a number of output sequences such that a total number of input sequences being processed by the layer blocks is less than or equal to the maximum batch size.

In some implementations, determining whether the termination criterion is satisfied comprises determining whether the respective self-attention layer is the respective self-attention layer at a last position of a last layer block of the sequence of layer blocks.

In some implementations, determining whether the termination criterion is satisfied comprises determining whether a confidence score for the self-attention layer satisfies a threshold value.

In some implementations, determining that the termination criterion is satisfied comprises determining that the confidence score for the self-attention layer is greater than or equal to the threshold value.

In some implementations, processing the respective embeddings for the inputs through one or more layer blocks in the sequence of layer blocks comprises: once the termination criterion is satisfied, refraining from performing any processing for any respective self-attention layers in subsequent layer blocks in the sequence at the output time step.

According to another aspect there is provided a computer-implemented method comprising: obtaining data specifying a pre-trained neural network, wherein the pre-trained neural network comprises a sequence of layers, and wherein the pre-trained neural network is configured to process, at each of multiple iterations, an input sequence of tokens for the iteration using each layer in the sequence of layers to generate an output sequence of tokens for the iteration; identifying a subset of layers derived from the sequence of layers; and generating a new neural network, wherein the new neural network comprises a plurality of layer blocks, wherein each layer block comprises a sequence of layers that includes a respective layer at each of a plurality of positions in the sequence of layers, wherein a respective first set of weights for the respective layers are derived from respective pre-trained sets of weights for the subset of layers, and wherein the new neural network is configured to process, at each of multiple iterations, an input sequence of tokens for the iteration using each layer block to generate an output sequence of tokens for the iteration.

In some implementations, the new neural network is configured to process, at each of multiple iterations, an input sequence of tokens for the iteration using each layer block in accordance with the respective first set of weights for each layer.

In some implementations, the subset of layers comprises a last layer of the sequence of layers, and one or more preceding layers of the sequence at a predetermined interval, and wherein the respective first sets of weights for the respective layers are initialized from the respective pre-trained sets of weights for the layers of the subset of layers.

In some implementations, the subset of layers comprises two or more layers from the sequence of layers, and wherein the respective first set of weights for each respective layer is initialized by combining two or more of the respective pre-trained sets of weights for the layers of the subset of layers.

In some implementations, generating the new neural network further comprises training the new neural network on a plurality of training examples without modifying the respective first set of weights for each respective layer at a same position in each layer block.

In some implementations, the new neural network is configured to process, at each of multiple iterations, an input sequence of tokens for the iteration using each layer block in accordance with a respective second set of weights for each layer.

In some implementations, the respective second sets of weights are learned by training the new neural network on a second plurality of training examples while holding the respective first sets of weights fixed.

In some implementations, each respective second set of weights is learned by training a respective lower-rank approximation of weights representative of updates to the new neural network.

In some implementations, training each of the respective lower-rank approximation of weights comprises: identifying a set of target update weights comprising a subset of weights of the new neural network; receiving a target rank specifying a dimensionality of the respective lower-rank approximation of weights; representing an update approximation for training updates to the target update weights using matrix decomposition in accordance with the target rank, wherein the matrix decomposition comprises a first matrix and a second matrix, each comprising values derived from a singular value decomposition of one or more sets of weights for the sequence of layers, and one or more sets of weights for the respective layers; the first and second matrix by training with a second plurality of training examples to perform gradient updates in accordance with an objective function; and generating an approximation of the target update weights using the respective lower-rank approximation of weights as the second set of weights.

In some implementations, the first matrix comprises values derived from right singular vectors of the singular value decomposition, and wherein the second matrix comprises values derived from left singular vectors and singular values of the singular value decomposition.

In some implementations, the output sequence is the result of performing a machine learning task on the input sequence, and: (a) the input sequence comprises at least one of one or more of image data, audio data, video data; and the output sequence comprises data describing content of the image data, audio data or video data; (b) the input sequence comprises data defining a context, and the output sequence comprises image data, audio data or video data having content defined by the context; (c) the input sequence comprises sensor data output by a sensor and describing a real-world environment, and the output sequence comprises control data for controlling an agent in the real-world environment described by the sensor data; or (d) the input sequence comprises electronic health record data for a patient and the output sequence comprises a treatment suggestion, diagnosis or prognosis for the patient.

Other embodiments of this aspect include corresponding computer systems, apparatus, and computer programs recorded on one or more computer storage devices, each configured to perform the actions of the methods.

The subject matter described in this specification can be implemented in particular embodiments so as to realize one or more of the following advantages.

The system described in this specification can perform machine learning tasks using fewer computational resources than conventional neural networks. For example, deployment of conventional neural networks can require substantial amounts of memory for storing the neural networks. In particular, for autoregressive neural networks, many operations are bottlenecked by memory accesses, and substantial parameter count further exacerbates this overhead. The system described in this specification has a smaller memory requirement than conventional neural networks for performing a machine learning task. For example, the system includes shared parameters among different layers of the neural network Because a set of parameters is reused across multiple layers, the system only needs to store one copy of the set of parameters, rather than storing, for each of the multiple layers, a different set of parameters. The system thus reduces the memory requirement for storing the neural network. For example, the neural network can include a sequence of layer blocks that each include a sequence of self-attention layers, and for each position in the sequence of layers, the respective self-attention layers at the position in each of the neural network layer blocks can share a first set of weights.

Reducing the memory requirement further allows for larger batch sizes for improved throughput. For example, a neural network that has a smaller memory requirement frees up memory that can be used to process a larger number of requests to generate outputs in a single batch, improving throughput. Reducing the memory requirement can further allow the use of fewer or lower-grade accelerators required to store the neural network, making the neural network accessible to a wider range of hardware components, including those with tighter memory constraints.

In some examples, the system can convert existing, pre-trained models into models that are smaller in size. For example, the system can leverage a subset of the existing model's pretrained parameters and reuse them within layer blocks. As a particular example, the system can include a neural network with multiple layer blocks, where the first set of weights for each respective self-attention layer in each layer block is derived from one or more sets of weights for respective layers of a pre-trained neural network. For example, the system can initialize the first set of weights for each respective self-attention layer in each layer block from one or more sets of weights for respective layers of the pre-trained neural network. By initializing the first sets of weights using the pre-trained neural network rather than random initialization, the system can achieve performance gains with reduced additional uptraining of the neural network.

In some examples, the system also includes low-rank adapters to enable layer specialization. For example, each layer of each layer block can include a respective second set of weights. As a particular example, each respective second set of weights can include a respective lower-rank approximation of weights representative of updates to the neural network (in other words, the method may derive the second set of weights by a process which comprises obtaining a matrix of numerical values (for example, from weights of at least one layer of a pre-trained neural network, e.g. representing differences between the respective weights of two layers of the pre-trained neural network) and extracting from them data (the second set of weights, or data subsequently used to produce the second set of weights) having a lower number of independent degrees of freedom than the number of obtained numerical values). In some examples, the system can represent the approximation of weights using a matrix decomposition that includes a first matrix and a second matrix. The second sets of weights allow for low-rank deltas between shared layers (i.e. if a group of self-attention layers in different respective layer blocks share a first set of weights, their respective second sets of weights allow the respective functions they perform to differ (e.g. slightly) from each other), and enables symmetry breaking and layer specialization while adding less parametric and computational overhead than allowing all self-attention layers of the neural network to have completely independent parameters. In some examples, the system leverages the pretrained weights of a pre-trained neural network. For example, the system can initialize the second set of weights for a layer using a singular value decomposition of the respective first set of weights for the layer and a corresponding pre-trained set of weights, e.g., from the pre-trained neural network. Thus, the system can perform the machine learning tasks without performance degradation while maintaining a compact representation.

In some examples, while generating the output sequence, the system can perform "early exiting." Early exiting refers to generating an output token using the output of an intermediate layer of the neural network, e.g., a layer that is not the last layer of the last layer block, rather than the last layer of the last layer block of the neural network. For example, the system can process embeddings for inputs in a current input sequence through one or more layer blocks until a termination criterion is satisfied. In response to determining that the termination criterion is satisfied, the system can process the output embedding for the last input in the current input sequence generated by the respective self-attention layer block at a last position in the layer block to generate a probability distribution and select the token from the probability distribution.

Performing early exiting can make the generation of the token more computationally efficient because the computation of any layers after the intermediate layer, such as layers in any subsequent layer blocks, does not need to be performed.

In some examples, the system can perform continuous depthwise batching to enhance serving efficiency for multiple requests for generating an output sequence. For example, due to the layer blocks including layers that, at each position in each of the layer blocks, share a first set of weights, the system can continuously schedule new requests while processing prior requests to maintain maximum batch size utilizations. Furthermore, in examples where the system performs early exiting, the system can further improve throughput. For example, once the system early exits for one or more input sequences, the system can continuously schedule new requests. Thus, the system can speed up generation through faster scheduling.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example task performance system.

FIGS. 2A-2B are a flow diagram of an example process for generating an output sequence.

FIG. 3 shows example neural networks.

FIG. 4 shows example initializations of sets of weights of a self-attention layer.

FIG. 5 shows a visualization of early exiting.

FIG. 6 shows the performance of example task performance systems.

FIG. 7 shows an example neural network training system.

FIG. 8 is a flow diagram of an example process for generating a new neural network.

Like reference numbers and designations in the various drawings indicate like elements.

DETAILED DESCRIPTION

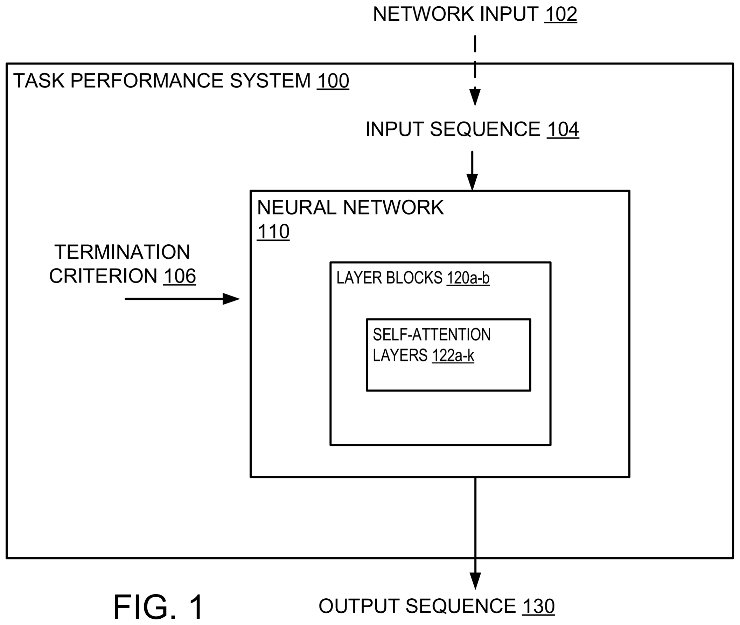

FIG. 1 is a diagram of an example task performance system 100. The task performance system 100 is an example of a system implemented as computer programs on one or more computers in one or more locations, in which the systems, components, and techniques described below can be implemented.

The task performance system 100 is a system that performs a machine learning task on a network input 102 using a neural network 110.

In particular, the system 100 generates an output sequence 130 that includes a respective token from a vocabulary of tokens at each of a plurality of output time steps.

In some examples, the vocabulary of tokens can include any of a variety of tokens that represent text symbols or other symbols. For example, the vocabulary of tokens can include one or more of characters, sub-words, words, punctuation marks, numbers, or other symbols that appear in a corpus of natural language text and/or computer code.

Additionally, or alternatively, the vocabulary of tokens can include tokens that can represent data other than text, such as images, videos, or audio. For example, the vocabulary of tokens can include image tokens that represent a discrete set of image patch embeddings of an image that can be generated by an image encoder neural network based on processing the image patches of the image. As another example, the vocabulary of tokens can include audio tokens that represent code vectors in a codebook of a quantizer, e.g., a residual vector quantizer.

The machine learning task can be any machine learning task that generates a network output that is an output sequence. That is, the machine learning task requires processing the network input to generate an output sequence. Some example machine learning tasks are described further below.

To perform the machine learning task, the system 100 uses the neural network 110 to generate an output sequence 130. The system 100 can generate the output sequence 130 autoregressively. That is, the system 100 can generate each particular token in the output sequence conditioned on a current input sequence that includes any tokens that precede the particular token in the output sequence.

The neural network 110 can have any appropriate architecture for generating an output sequence. For example, the neural network 110 can include an auto-regressive decoder neural network.

Some example suitable architectures for the neural network are described in further detail in Gemini Team, et al., Gemini: a family of highly capable multimodal models. arXiv preprint arXiv:2312.11805, 2023; Gemma Team, et al., Gemma: Open Models Based on Gemini Research and Technology. arXiv preprint arXiv:2403.08295; or Chowdhery, et al., PaLM: Scaling Language Modeling with Pathways, arXiv preprint arXiv:2204.02311.

The neural network 110 includes a sequence of layer blocks 120a-b. Each layer block of the layer blocks 120a-b includes a corresponding sequence of self-attention layers 122a-k. The sequence of self-attention layers 122a-k includes a respective self-attention layer at each of multiple positions in the sequence of layers. The term "position" in the sequence of layers is used here to refer to one of the sequence of layers within a layer block (rather than, for example, a position within one of the layers). For example, the first layer in each layer block is at a first position of the layer block.

The term "depth" is used here as an index of layers within the sequence of layer blocks 120a-b; the first layer has a depth of one, and each successive layer within the sequence of layer blocks 120a-b has a "depth" one higher than the one before. For example, the depth of a first layer of a second layer block is one higher than the depth of a last layer of a first layer block.

The neural network 110 is configured to receive a respective embedding for each input in an input sequence 104. The input sequence 104 includes a respective input at each of one or more input positions. That is, the term "input position" is used here to mean a portion of the input sequence 104 which is (only) occupied by one of the inputs. An embedding can refer to an ordered collection of numerical values, e.g., a vector, matrix, or other tensor of numerical values.

The neural network 110 is configured to process the respective embeddings for the inputs in the input sequence through each layer block to generate a respective output embedding for each input in the input sequence.

Each layer block receives a sequence of hidden states as input and generates a new, more refined sequence of hidden states as output. The output of one layer block (except the last layer block of the sequence of layer blocks) becomes the input for the next layer block.

Each attention layer of each layer block operates (in each time-step) on a respective input sequence that includes a respective input vector at each of one or more positions. The input vectors will also be referred to as "hidden states" or "embeddings" in this specification. In each layer block, each attention layer (except the first attention layer of the layer block) receives and processes (in each time step) an input sequence which is output by the preceding attention layer of the sequence.

Each self-attention layer of each layer block is configured to obtain data derived from a respective input embedding for each input in the input sequence and generate a respective output embedding for at least a last input in the input sequence at least in part by applying an attention mechanism using the data derived from the respective input embeddings. The output of each layer block may be the output embedding which is output by the last self-attention layer of the layer block.

Each of the self-attention layers can include a self-attention neural network layer followed by a feedforward neural network. A self-attention neural network layer is a neural network layer that applies an attention mechanism. Some examples of self-attention layers are described in Vaswani et al. "Attention is all you need", 31st Conference on Neural Information Processing Systems (NIPS 2017), Long Beach, CA, USA. In some examples, each of the self-attention layers can include one or more normalization layers, e.g., an RMSNorm layer.

For each position in the multiple positions, the respective self-attention layers at the position in each of the layer blocks share a first set of weights. The first set of weights may be a subset of the weights which collectively define the function of the corresponding self-attention layer. The neural network 110 can perform processing at each respective self-attention layer in accordance with the first set of weights for the respective self-attention layer.

For example, each self-attention layer of a given layer block may be associated with a corresponding self-attention layer at the same corresponding position in each of the other layer blocks (i.e. the same position within the layer block; that is, counting from the first layer of the layer block), so that the associated self-attention layers of the multiple layer blocks form a group of associated self-attention layers. Each of these groups corresponds to one of the first sets of weights, i.e. for a given group of self-attention layers, each self-attention layer of the group includes the corresponding first set of weights in the weights defining the self-attention layer. For each group of associated self-attention layers, each self-attention layer may perform a mathematical function which is of the same form except that it is defined by the weights of that self-attention layer. For each group of associated self-attention layers, each self-attention layer may employ the first set of weights in the same way in the corresponding mathematical function. For example, a given first set of weights may include at least one corresponding matrix, and each of the corresponding group of self-attention layer may employ the at least one matrix in the same way in the corresponding mathematical function. For example, each layer in the group may use the (same) at least one matrix as at least one key weight matrix, at least one query weight matrix, at least one value weight matrix, an output projection matrix and/or at least one feed-forward weight matrix (that is the weights of a feedforward neural network unit included in the self-attention layer). To put this more simply, a given first set of weights may play the same role in each of the respective group of associated self-attention layers.

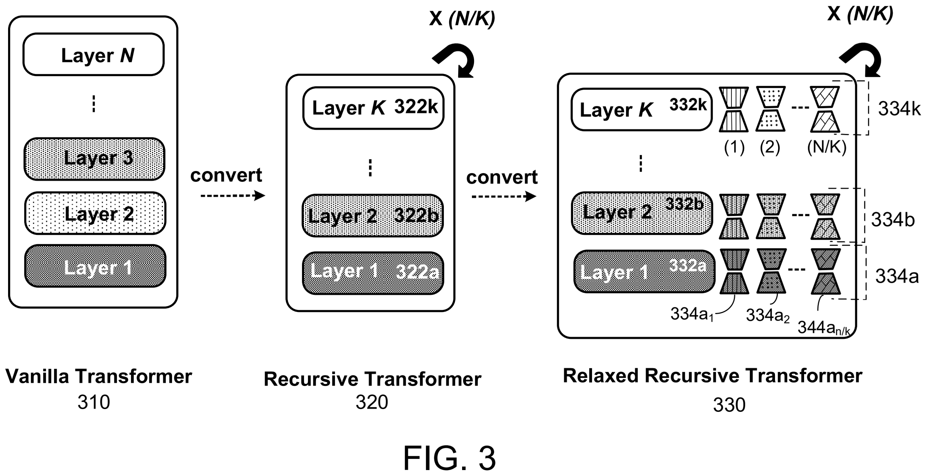

Example neural networks that include self-attention layers that share a first set of weights are described in further detail below with reference to FIG. 3-4.

Thus, the system can store shared parameters among different layers of the neural network once, reducing the memory requirement compared to storing different parameters for all layers of the neural network.

In some examples, each self-attention layer can include a respective second set of weights. For each group of associated self-attention layers, the corresponding second set of weights for each self-attention layer of the group may be different, but each second set of weights may play the same role in each self-attention layer of the group (i.e. each second set of weights may be used in the same way by the corresponding mathematical function of the corresponding self-attention layer).

In these examples, the neural network 110 is configured to perform processing at each respective self-attention layer in accordance with the first set of weights and the second set of weights for the respective self-attention layer.

For example, the respective second set of weights for each self-attention layer can include a low-rank approximation of weights that are representative of updates to the neural network 110. For example, the low-rank approximation weights for a self-attention layer can be representative of updates to the neural network that would have been applied to the self-attention layer during training of the neural network. Example neural networks that include self-attention layers that each include a second set of weights are described in further detail below with reference to FIG. 3-4.

Thus, the system can mitigate the potential performance degradation associated with parameter sharing of the first sets of weights.

While generating the output sequence 130, to generate a token at an output time step, the neural network 110 is further configured to process an output embedding for the last input in the input sequence, e.g., using an output subnetwork not shown in Fig. 1, to generate a probability distribution over the tokens in the vocabulary. The system 100 selects the token at the output time step using the probability distribution.

The output subnetwork is configured to process an output embedding (e.g. generated by the last layer block 120b of the sequence, but another possibility is discussed below) to generate a probability distribution over the tokens in the vocabulary. The output subnetwork can have any appropriate architecture for generating a probability distribution from an output embedding. In implementations the output subnetwork is implemented as a neural network, the output subnetwork can include any appropriate types of neural network layers (e.g., fully connected layers, message passing layers, convolutional layers, attention layers, recurrent layers, pooling layers, and so forth), in any appropriate number (e.g., 5 layers, or 10 layers, or 50 layers), and connected in any appropriate configuration (e.g., as a directed graph of layers). As an example, the output subnetwork can include a linear layer and a softmax layer.

In some cases, the system generates an output token using the output embedding of the last self-attention layer of the last layer block of the neural network 110.

In some implementations, the system uses "early exiting." For example, in some cases, while generating the output sequence 130, the system 100 can perform "early exiting" by generating an output token using the output of an intermediate self-attention layer of the neural network, e.g., a self-attention layer that is not the last self-attention layer of the last layer block, rather than the last self-attention layer of the last layer block of the neural network 110. In response to determining that a termination criterion is satisfied, the system 100 refrains from processing (i.e. does not process) for any respective self-attention layers in subsequent layer blocks in the sequence of layer blocks at the output time step. Instead, the output embedding of the layer block at the output time step is the output embedding which was most recently generated and output by one of the layer blocks.

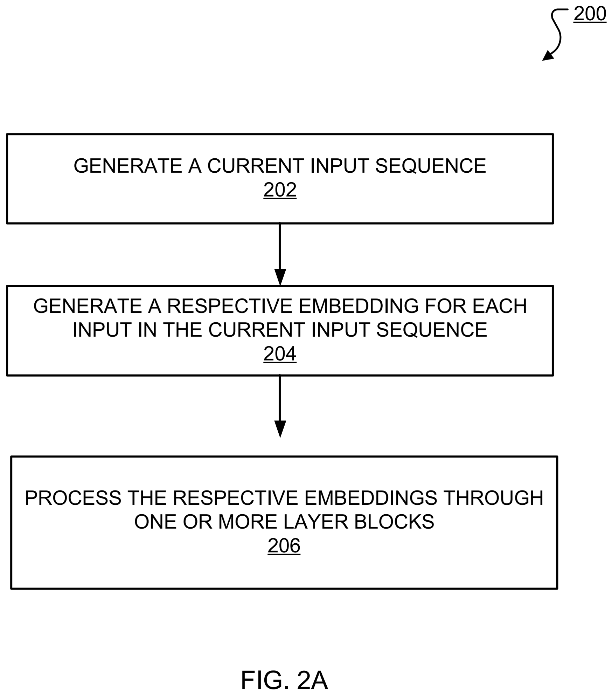

In implementations where the system uses early exiting, the system can determine whether to early exit based on a termination criterion 106. For example, the system can determine whether to early exit during generation of each particular token and at each layer block of the neural network 110. Generating the output sequence is described in further detail below with reference to FIGS. 2A-2B.

Thus, in cases where the system performs early exiting, the system can generate tokens of the output sequence 130 using fewer computational resources than would otherwise be required to process input sequences through all self-attention layers of the neural network 110.

FIGS. 2A-2B are a flow diagram of an example process 200 for generating an output sequence. For convenience, the process 200 will be described as being performed by a system of one or more computers located in one or more locations. For example, a task performance system, e.g., the task performance system 100 of FIG. 1, appropriately programmed, can perform the process 200.

The system generates an output sequence that includes a respective token from a vocabulary of tokens at each of multiple output time steps. The system performs the steps 202-206 at each of multiple output time steps.

The system generates a current input sequence (step 202). For example, the system can generate the current input sequence from at least the tokens at output time steps that precede the output time step in the output sequence.

For example, at output time step t, the system generates the current input sequence to include one or more tokens generated for output time steps 1, ..., t-1. In some examples, the current input sequence can include any tokens generated at output time steps that precede the output time step in the output sequence.

In some other examples, the system can include one or more tokens generated at output time steps that precede the output time step in the output sequence. As a particular example, when the system uses KV-caching, the current input sequence can include the token generated at the immediately preceding output time step.

In some examples, when the system uses KV-caching, the system can include the token generated at the immediately preceding output time step, and key and value vectors from a cache for each self-attention layer for inputs at output time steps that precede the immediately preceding output time step.

In some examples, the output sequence is conditioned on a network input. In these examples, the system receives the network input. The network input can include, for example, data for performing a machine learning task. The current input sequence can include one or more inputs corresponding to the network input.

In some examples, the system can generate the one or more inputs corresponding to the network input, e.g., by processing the network input using an appropriate tokenizer. For example, the system can tokenize a given sequence of words by applying a tokenizer, e.g., the SentencePiece tokenizer (Kudo et al., arXiv:1808.06226) or another tokenizer, to divide the sequence into tokens from the vocabulary.

The system generates a respective embedding for each input in the current input sequence (step 204). For example, the system can map each token to corresponding numerical values in accordance with a predefined mapping. As an example, the predefined mapping can be represented as an embedding matrix that has learned values. In other examples, the predefined mapping can be represented as a different learned module such as a neural network.

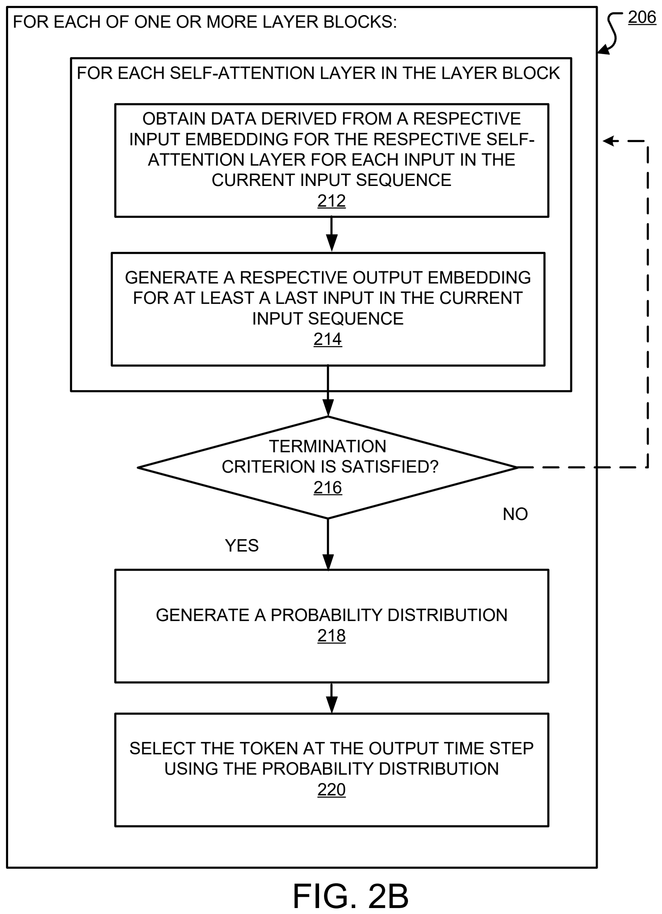

The system processes the respective embeddings through one or more layer blocks (step 206). For example, the system processes the respective embeddings for the inputs in the current input sequence through one or more layer blocks in the sequence of layer blocks until a termination criterion is satisfied. An example process for processing the respective embeddings for the inputs in the current input sequence is described in further detail with reference to FIG. 2B.

Referring to FIG. 2B, the system performs the steps 212-220 for each of one or more layer blocks in the sequence of layer blocks, starting from the first layer block in the sequence, and until the termination criterion is satisfied.

The system performs the steps 212-214 for each self-attention layer in the layer block.

The system obtains data derived from a respective input embedding for the respective self-attention layer for each input in the current input sequence (step 212).

At the first self-attention layer in the first layer block, the respective input embedding for each input in the current input sequence includes the respective embedding for each input in the current input sequence generated in step 204.

For the first self-attention layer in each layer block after the first layer block, the respective input embedding for each input in the current input sequence includes the respective output embedding for the input generated using the last self-attention layer of the preceding layer block.

For each subsequent self-attention layer in each layer block, the respective input embedding for each input in the current input sequence includes the respective output embedding for the input generated using the preceding self-attention layer.

The data derived from a respective input embedding for the respective self-attention layer for each input in the current input sequence can include query (Q), key (K), and value (V) vectors for the input.

In some examples where the current input sequence includes each input of the input sequence, the system can generate query, key, and value matrices. For example, to generate the query matrix, the system can apply a query transformation, e.g., parameterized by a learned weight query matrix $W_\ell^Q$, to the respective input embeddings for the current input sequence. To generate the key matrix, the system can apply a key transformation, e.g., parameterized by a learned key weight matrix $W_\ell^K$, to the respective input embeddings for the current input sequence. To generate the value matrix, the system can apply a value transformation, e.g., parameterized by a learned value weight matrix $W_\ell^V$, to the respective input embeddings for the current input sequence.

In examples where the current input sequence includes one input, e.g., where the system uses KV-caching, the system can generate query, key, and value vectors for the input. For example, to generate the query vector, the system can apply a query transformation, e.g., parameterized by a learned query weight matrix $W_\ell^Q$, to the respective input embedding for the input. To generate the key vector, the system can apply a key transformation, e.g., parameterized by a learned key weight matrix $W_\ell^K$, to the respective input embedding for the input. To generate the value vector, the system can apply a value transformation, e.g., parameterized by a learned value weight matrix $W_\ell^V$, to the respective input embedding for the input.

The system can obtain a key matrix by combining, e.g., appending, the key vector for the input to a retrieved key matrix. The retrieved key matrix can include a key vector for each input at output time steps that precede the output time step for the input. The retrieved key matrix can have been retrieved from a KV-cache for the self-attention layer. The system can obtain a value matrix by combining, e.g., appending, the value vector for the input to a retrieved value matrix. The retrieved value matrix can include a value vector for each input at output time steps that precede the output time step for the input. The retrieved value matrix can have been retrieved from a KV-cache for the self-attention layer. The system can retrieve cached key and value matrices for inputs at output time steps that precede the output time step for the input from a KV-cache for the self-attention layer.

The system generates a respective output embedding for at least a last input in the current input sequence (step 214). For example, the system can generate the respective output embedding at least in part by applying an attention mechanism using the data derived from the respective input embeddings.

For example, the system can generate a respective output embedding for each input in the current input sequence.

As an example, when the current input sequence includes each input of the input sequence, the system can generate a respective output embedding for each input. As another example, when the current input sequence includes one input, e.g., where the system uses KV-caching, the system can generate a respective output embedding for the input.

The system can generate each respective output embedding by applying the attention mechanism over the query, key, and value vectors for at least the input to generate a respective attention output for the input. The system can process the respective attention output, e.g., using a feedforward network, to generate the respective output embedding.

The attention mechanism is configured to determine relationships within the input sequence. For example, when the current input sequence includes each input of the input sequence, the attention mechanism may be a dot product attention operation applied by applying each query vector to each key vector to determine respective weights for each value vector, then combining the value vectors using the respective weights to determine the attention output for each input of the input sequence.

As another example, when the current input sequence includes one input, e.g., where the system uses KV-caching, the attention mechanism may be a dot product attention operation applied by applying the query vector to each key vector in the key matrix to determine respective weights for each value vector in the value matrix, then combining the value vectors using the respective weights to determine the attention output for the input.

In some implementations, the system can scale the attention output by a scaling factor e.g. by the square root of the dimensions of the queries and keys, to implement scaled dot product attention. Thus, for example, an output of the attention operation may be determined as $Attention(Q, K, V) = softmax\left(\frac{QK^T}{\sqrt{d_k}}\right)V$ where $d_k$ is a dimension of the key (and value) vector.

In some implementations, the attention mechanism can implement multi-head attention, that is, it may apply multiple different attention mechanisms in parallel. The attention outputs of these can then be combined, e.g. concatenated, to generate the attention output. In some implementations, the attention mechanism can apply a learned linear transformation defined by a learned output projection matrix $W_\ell^{out}$ to the combination of attention outputs to reduce to the original dimensionality.

The system can generate the output embedding for the input by processing the attention output of the attention mechanism, e.g., using a feed-forward network.

The feed-forward network is configured to process an attention output to generate an output embedding in accordance with a learned feed-forward weight matrix for the feed-forward network. The feed-forward network can have any appropriate architecture for processing an attention output to generate an output embedding. As a particular example, the feed-forward network can include one or more linear layers and an activation function, e.g., a Rectified Linear Unit (ReLU) or Gaussian Error Linear Unit Gated Linear Unit (GeGLU) activation function.

The system determines whether the termination criterion is satisfied (step 216).

In implementations where the system does not use early-exiting, the system can determine whether the termination criterion is satisfied by determining whether the respective self-attention layer is the respective self-attention layer at a last position of a last layer block of the sequence of layer blocks. For example, the system can determine that the termination criterion is satisfied if the respective self-attention layer is the respective self-attention layer at a last position of a last layer block of the sequence of layer blocks.

In implementations where the system does use early-exiting, the system can determine whether the termination criterion is satisfied, e.g., based on a confidence score for the self-attention layer, as described below. In cases where the respective self-attention layer is the respective self-attention layer at a last position of a last layer block of the sequence of layer blocks, and the termination criterion was not satisfied at any preceding self-attention layer, the system can determine that the termination criterion is satisfied.

As an example, the system can determine whether the termination criterion is satisfied by determining whether a confidence score for the self-attention layer satisfies a threshold value. For example, the system can determine whether the termination criterion is satisfied by determining that the confidence score for the self-attention layer is greater than or equal to the threshold value.

As an example, the confidence score can be based on a softmax distribution generated by the self-attention layer.

For example, the system can generate the confidence score by generating a probability distribution over the tokens in the vocabulary from the respective output embedding for the last input in the current input sequence. For example, the probability distribution can be a softmax distribution generated by projecting the respective output embedding using a linear layer to generate a vector that includes a score for each token in the vocabulary, and processing the vector of scores using a softmax layer to generate the softmax distribution.

In some examples, the system can determine the confidence score based on a highest probability in the probability distribution. In some other examples, the system can determine the confidence score based on a difference between a highest probability in the probability distribution and a second highest probability in the probability distribution. In some other examples, the system can determine the confidence score based on a similarity measure, e.g., cosine similarity, between (i) the respective output embedding for the last input in the current input sequence generated by the self-attention layer and (ii) the respective output embedding for the last input in the current input sequence generated by the preceding self-attention layer in the sequence.

As another example, the system can generate the confidence score using a classifier machine learning model that is configured to predict the likelihood of exiting, e.g., given one or more current hidden states. For example, the system can generate the confidence score by processing the output embedding for the last input in the current input sequence using the classifier machine learning model.

The classifier machine learning model can have any appropriate architecture for predicting the likelihood of exiting given an output hidden state, i.e., predicting the likelihood that the token with the highest probability in the probability distribution at the self-attention layer will be the same as the token with the highest probability in the probability distribution of the last self-attention layer of the last layer block. In implementations where the classifier machine learning model is implemented as a neural network, the classifier machine learning model can include any appropriate types of neural network layers (e.g., fully connected layers, message passing layers, convolutional layers, attention layers, recurrent layers, pooling layers, and so forth), in any appropriate number (e.g., 5 layers, or 10 layers, or 50 layers), and connected in any appropriate configuration (e.g., as a directed graph of layers). As an example, the classifier machine learning model can have been trained using a per-layer independent cross-entropy loss against a target label that indicates whether the token with the highest probability in the probability distribution at the self-attention layer is the same as the token with the highest probability in the probability distribution of the last self-attention layer of the last layer block. The target label can have been generated by comparing each layer's token with the highest probability to the token with the highest probability at the last self-attention layer of the last layer block.

In some examples, the self-attention layer is the self-attention layer at a last position in the layer block. For example, the system can determine that the termination criterion is satisfied if a confidence score for the self-attention layer at a last position in the layer block satisfies a threshold value. That is, the system can determine to early-exit at the layer block for the self-attention layer. That is, any subsequent layer block(s) are not used to further refine the input sequence.

In some examples, the self-attention layer is the self-attention layer at an intermediate position in the layer block. For example, the system can determine that the termination criterion is satisfied if a confidence score for a self-attention layer at any intermediate position (preceding position to the last position in the layer block) satisfies a threshold value. That is, the system can determine to early-exit at the self-attention layer.

In response to determining that the termination criterion is not satisfied, the system proceeds to perform steps 212-220 for the next layer block in the sequence of layer blocks.

In response to determining that the termination criterion is satisfied, the system generates a probability distribution (step 218). For example, the system processes the output embedding for the last input in the current input sequence generated by the respective self-attention layer at a last position in the layer block at which the termination criterion is satisfied to generate a probability distribution over the tokens in the vocabulary.

As an example, the system can generate the probability distribution using an output subnetwork. For example, the system can process the output embedding using a linear layer to generate a vector that includes a score for each token in the vocabulary. The system can process the vector of scores using a softmax layer to generate the probability distribution. The probability distribution assigns a respective probability to each token in the vocabulary.

In some examples where the system determines whether the termination criterion is satisfied based on a confidence score that is based on the softmax distribution generated at the self-attention layer, the system can re-use the softmax distribution generated at the self-attention layer as the probability distribution.

The system selects the token at the output time step using the probability distribution (step 220). For example, the neural network can greedily select the highest-scoring token or can sample, e.g., using top-k sampling, nucleus sampling or another sampling technique, a token from the probability distribution.

Alternatively, in some implementations, in response to determining that the termination criterion is satisfied, the system generates the token at the output time step as the output embedding for the last input in the current input sequence (e.g. using the output subnetwork, if any). The system can decode the token at the output time step using an appropriate decoder neural network, e.g., for image generation or audio generation.

Once the termination criterion is satisfied, the system refrains from performing any processing for any respective self-attention layers in subsequent layer blocks in the sequence at the output time step. The system can proceed to step 202 for a next output time step.

In examples where the output time step is the last output time step, the system can output the output sequence. In some examples, the system can process the output sequence using an appropriate detokenizer for the machine learning task.

FIG. 3 shows example neural networks 310, 320, and 330. The example neural networks 320 and 330 are examples of neural networks that can be used as the neural network 110 described above with reference to FIG. 1.

Neural network 310 is a neural network which is trained (e.g. by a conventional method) to perform autoregressive processing of a network input to form a network output, and subsequently used to form the neural networks 320 and 330. Thus, neural network 310 is referred to as an "existing neural network" (or in some cases below as a "pre-trained neural network").

The example neural network 320 includes self-attention layers that include a first set of weights derived from one or more sets of weights for respective layers of the existing neural network 310, but not a respective second set of weights (e.g. all self-attention layers in each group of associated self-attention layers are identical to each other, so that all layer blocks are identical to each other). The example neural network 320 is also referred to as a "recursive" model, because it can be considered as a single layer block which is used recursively. The neural network 320 performs processing at each self-attention layer in accordance with the first set of weights for the self-attention layer.

The example neural network 330 includes self-attention layers that include a first set of weights derived from one or more sets of weights for respective layers of the existing neural network 310, and a second set of weights. The example neural network 330 is also referred to as a "relaxed" model. The neural network 330 performs processing at each self-attention layer in accordance with the first set of weights for the self-attention layer and the second set of weights for the self-attention layer.

FIG. 3 shows the example neural networks 320 and 330 in comparison to the pre-trained neural network 310. In some examples, the pre-trained neural network 310 can have been pre-trained to perform the machine learning task. In some examples, the pre-trained neural network 310 can have been pre-trained to perform a different machine learning task or a more general machine learning task than the neural networks 320 and 330.

The pre-trained neural network 310 includes N, or used interchangeably with L, self-attention layers. At each time step t, the hidden states of the neural network 310 are computed by running through the series of self-attention layers

$$h_t^\ell = f\left(\boldsymbol{h}_t^{\ell-1};\ \Phi_\ell\right)_, \ell \in [1, L]$$ where $\boldsymbol{h}_t^0$ represents the embedding of the token $y_{t-1}$ from the previous time step, and $\Phi_\ell$ represents the trainable parameters of the l-th layer.

Each of the neural networks 320 and 330 include a sequence of B layer blocks, where $B=N/K$ and $K$ is the number of self-attention layers in the sequence of self-attention layers included in each layer block. The sequence of self-attention layers included in each block includes a respective self-attention layer at each of multiple positions.

For each position of the multiple positions, the self-attention layers at that position in each of the layer blocks share a first set of weights. For example, the first set of weights for each self-attention layer can include any one or more of: a key-value weight matrix, a query weight matrix, an output projection matrix, and a feed-forward weight matrix.

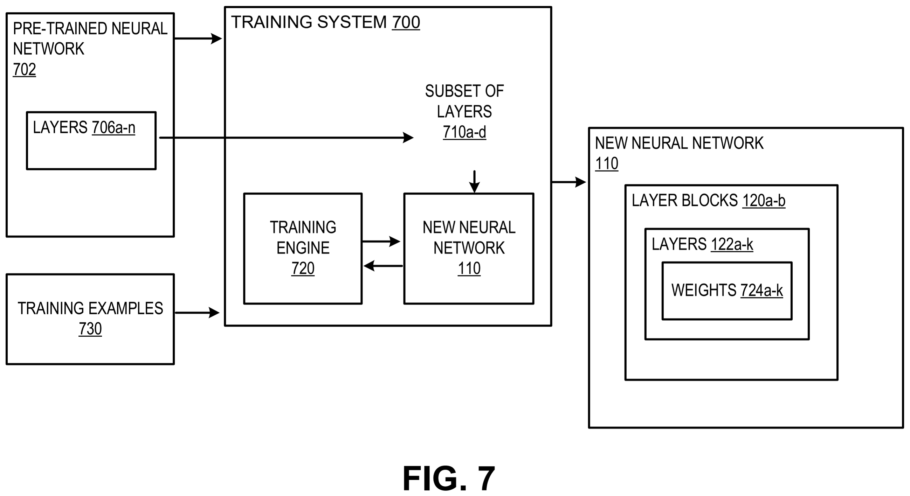

The first set of weights for each self-attention layer in the example neural networks 320 and 330 can have been determined as part of "uptraining." Training the example neural networks 320 and 330 to determine the first sets of weights is described in further detail below with reference to FIGS. 7-8.

In the example of FIG. 3, the recursive model 320 includes $B=N/K$ layer blocks, that each include K self-attention layers 322a-k. Each layer block includes self-attention layer 322a that includes a first set of weights derived from one or more sets of weights for respective layers of the existing neural network 310. The self-attention layer 322b includes a first set of weights derived from one or more sets of weights for respective layers of the existing neural network 310. The self-attention layer 322k includes a first set of weights derived from one or more sets of weights for respective layers of the existing neural network 310.

The hidden states of the neural network 320 can thus be computed as

$$h_t^\ell = f\left(h_t^{\ell-1};\ \Phi'_{((\ell-1)mod\ L/B)+1}\right), \ell \in [1, L]$$ where the neural network 320 is parameterized by $\Phi'$, and B denotes the number of layer blocks. As a particular example, a Gemma model with 2B parameters and 18 layers can be converted to a recursive model with two layer blocks by learning weights for the first nine layers. A forward pass through the recursive model loops twice through the nine layers.

The neural network 320 can thus repeat the same layer block for each layer block in the sequence, i.e., each layer block includes, for the same position in the sequence of self-attention layers, self-attention layers that share the same first set of weights, resulting in a looped architecture.

In the example of FIG. 3, the neural network 330 includes $B=N/K$ layer blocks, that each include K self-attention layers 332a-k. Each of the $K$ self-attention layers includes a first set of weights, as described above.

Each of the K self-attention layers also includes a respective second set of weights for each layer block that serve as layer-specific adaptation weights. By using layer-specific adaptation weights, the system can preserve the advantages of weight sharing while allowing for better performance.

As a particular example, the respective second set of weights for each self-attention layer can include one or more weight update matrices to be combined with one or more weight matrices of the first set of weights for the self-attention layer, e.g., by combining the output of processing at the self-attention layer in accordance with the one or more weight matrices of the first set of weights, with the output of processing at the self-attention layer in accordance with the one or more weight update matrices. For example, the respective second of weights can include one or more weight update matrices that are representative of updates to the neural network.

As an example, the respective second set of weights can include a set of low rank adaptation (LoRA), also referred to as low-rank approximation, weights for the layer. Examples of weight update matrices are described in further detail in Hu, E. et al., Lora: Low-rank adaptation of large language models, arXiv:2106.09685 (2021) and Houlsby, N. et al., Parameter-efficient transfer learning for NLP, arXiv:1902.00751 (2019).

For different layer blocks, during performance of a forward pass, the system can use the respective second set of weights for a particular layer and the first layer block during processing by the first layer block, the respective second set of weights for the particular layer and the second layer block during processing by the second layer block, and so on.

As an example, for a base transformation h = W'x where h is the output hidden state, W' is the first set of weights of the self-attention layer, and x is the input hidden state, during performance of a forward pass, the system can generate the output hidden state as h = W'x + ΔW'x = W'x + BAx, where $A \in \mathbb{R}^{(r \times k)}$ and $B \in \mathbb{R}^{(d \times r)}$ denote a first matrix and a second matrix of the one or more weight update matrices with rank r, where k is the input dimension of the pre-trained neural network, and d is the output dimension of the pre-trained neural network.

FIG. 3 shows that the second set of weights for each layer 332a-k of each layer block includes one or more weight update matrices 334a-k.

For example, for Layer 1 332a, the second set of weights includes a first and second matrix $334a_1$ for the first layer block, a first and second matrix $334a_2$ for the second layer block, and a first and second matrix $334a_{n/k}$ for the N/Kth layer block.

For different layer blocks, during performance of a forward pass, the system can use the first and second matrix $334a_1$ during processing by the first layer block, the first and second matrix $334a_2$ during processing by the second layer block, and so on.

The respective second set of weights for each self-attention layer of each layer block can include a different set of weights, i.e., a set of weights that differs between other self-attention layers within the same block and other self-attention layers in different blocks. For example, for different layer blocks, the second set of weights can include different weight update matrices, resulting in different weight update matrices being used for the same layer over the different layer blocks. For instance, the layer 332a can have different weight update matrices $334a_1$ for the first layer block than the weight update matrices $334a_2$ the second layer block. Thus, the system can "relax" the weight tying of the neural network 320.

The hidden states of the neural network 330 can thus be computed as

$$h_t^\ell = f\left(h_t^{\ell-1};\ \Phi'_{((\ell-1)\bmod L/B)+1}, \Delta\Phi'_\ell\right),\ \ell \in [1, L]$$

where the neural network 330 is parameterized by $\Phi'$, B denotes the number of layer blocks, and $\Delta\Phi'$ represents the set of parameters for the weight update matrices.

In some implementations, the system can enable parallel computation for samples across different layer blocks. For example, during batched inference, processing using the relaxed model may require processing samples within a batch in accordance with different second sets of weights simultaneously, which can incur computational overhead due to challenging parallel computation. As an example, the system can combine, e.g., concatenate, the respective second set of weights for each self-attention layer at the same position in each layer block over different layer blocks. The system can thus concatenate multiple second sets of weights into a single larger weight matrix, enabling the parallel computation for samples across different layer blocks by processing at each layer at the same position over different layer blocks in accordance with the single larger matrix. As another example, the system can efficiently serve LoRA with optimized kernels, or parallelize LoRA module computations across multiple accelerators.

Alternatively or in addition, the system can use layer-specific prompts to "relax" the model. For example, for each self-attention layer of each layer block, the system can include a layer-specific prompt as prefix tokens to the current input sequence for the self-attention layer. The system can thus perform parallel computation, leading to reduced computational overhead.

In some implementations, the first set of weights can include weights for one or more normalization layers. In some examples, the weights for the one or more normalization layers can be initialized from normalization layers of a single corresponding self-attention layer of the pre-trained neural network. In some other examples, the weights for the one or more normalization layers can be initialized from two self-attention layers of the pre-trained neural network 310, e.g., by averaging weights of normalization layers from the two self-attention layers. In some other examples, the weights for the one or more normalization layers can be initialized with zeros.

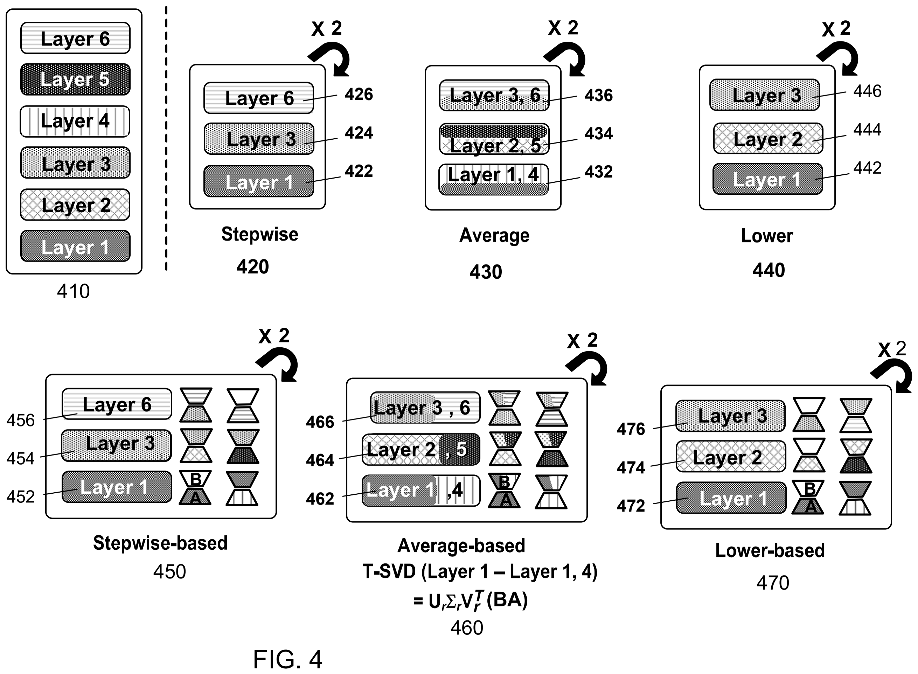

Examples of generating a new neural network from a pre-trained neural network are described in further detail below with reference to FIGS. 7-8. Examples of initializing a new neural network from a pre-trained neural network is described in further detail below with reference to FIG. 4.

FIG. 4 shows example initializations of sets of weights of a self-attention layer. As described above, the first set of weights for each respective self-attention layer in each layer block can be derived from one or more sets of weights for respective layers of a pre-trained neural network 410. After initializing the first set of weights, the system can determine updates to the first set of weights by performing uptraining, as described in further detail with reference to FIGS. 7-8.

FIG. 4 shows the pre-trained neural network 410 that includes 6 self-attention layers. The example neural networks 420-470 each include two layer blocks, that each include three self-attention layers.

In some examples, the first set of weights for each respective self-attention layer in each layer block is initialized from a set of weights for a respective single layer of a pre-trained neural network.

As an example, the first set of weights for the respective self-attention layer at a last position in each layer block can be initialized from a set of weights for the last layer of a pre-trained neural network. The first set of weights for respective self-attention layers at one or more preceding positions is initialized from one or more sets of weights for respective single layers of the pre-trained neural network at a predetermined interval, e.g., every other layer. In some examples, the first set of weights for the respective self-attention layer at a first position in each layer block can be initialized from a set of weights for the first layer of the pre-trained neural network.

FIG. 4 shows an example neural network 420 where the first set of weights for the respective self-attention layer at a last position in each layer is initialized from a set of weights for the last layer of the pre-trained neural network 410, and the first set of weights for respective self-attention layers at one or more preceding positions is initialized from one or more sets of weights for respective single layers of the pre-trained neural network 410 at a predetermined interval. The neural network 420 includes self-attention layer 422 that is initialized from layer 1 of the neural network 410, layer 424 that is initialized from layer 3 of the network 410, and layer 426 that is initialized from layer 6 of the neural network 410. This initialization method can provide effective performance by preserving key layers from the pre-trained neural network 410, e.g., the first and last layers.

As another example, the first set of weights for the respective self-attention layers can be initialized from sets of weights for earlier layers, e.g., the first K layers, of a pre-trained neural network.

FIG. 4 shows an example neural network 440 where the first set of weights for the respective self-attention layers are initialized from sets of weights for earlier layers of a pre-trained neural network. The neural network 440 includes self-attention layer 442 that is initialized from layer 1 of the neural network 410, layer 444 that is initialized from layer 2 of the network 410, and layer 446 that is initialized from layer 3 of the neural network 410.

As another example, the first set of weights for each respective self-attention layer in each layer block can be initialized by combining two or more sets of weights for respective layers of the pre-trained neural network. For example, the first set of weights for the self-attention layer at each position can be derived from two or more sets of weights for layers of a pretrained neural network. For example, each first set of weights can be a combination, e.g., average, of the sets of weights for two layers of the pre-trained neural network.

FIG. 4 shows a neural network 430 where the first set of weights for each respective self-attention layer is initialized from two or more sets of weights for respective layers of the pre-trained neural network 410. The neural network 430 includes a self-attention layer 432 that includes a first set of weights initialized from layers 1 and 4 of the neural network 410, a self-attention layer 434 that includes a first set of weights initialized from layers 2 and 5, and a self-attention layer 436 that includes a first set of weights initialized from layers 3 and 6.

FIG. 4 also shows example initializations of second sets of weights of a self-attention layer. As described above, the second set of weights is different for each respective self-attention layer in each layer block. After initializing the second set of weights, the system can determine updates to the second set of weights by performing uptraining, as described in further detail with reference to FIGS. 7-8. For example, the neural networks 450, 460, and 470, correspond to the neural networks 420, 430, and 440, respectively, but are "relaxed" as described below with reference to FIGS. 7-8.

In some examples where the neural network includes self-attention layers that each include a respective second set of weights, a respective second set of weights can be initialized using singular value decomposition (SVD). For example, the respective second set of weights for a particular self-attention layer can be initialized using an SVD performed on the difference between the first set of weights for the particular self-attention layer of the neural network, and the first set of weights for a corresponding self-attention layer of a pre-trained neural network. The corresponding self-attention layer can be the self-attention layer of the pre-trained neural network that has the same depth as the particular self-attention layer of the neural network.

In some other examples where the first set of weights for a self-attention layer is initialized from weights of one corresponding layer of the original pretrained neural network, e.g., the first set of weights for the self-attention layer was initialized from a corresponding layer of the original pretrained neural network that has a same depth in the pretrained neural network (e.g., an index of the corresponding layer within the original pretrained neural network) as the depth of the self-attention layer in the overall sequence of layer blocks (e.g., an index of the self-attention layer within the sequence of layer blocks), the system uses standard zero initialization for the corresponding matrix decomposition.

The second set of weights may comprise a first matrix A and a second matrix B. Matrix A may have a larger number of columns than rows, and matrix B may have a larger number of rows than columns, such that if the matrices are applied to an input sequence x by forming the product BAx, the matrices A and B respectively perform dimension reduction and dimension increase on the vector x. In Fig. 4, each matrix A is shown by an "upward pointing" trapezium (i.e. a trapezium narrower at the top, to indicate dimension reduction), and each matrix B by a "downward pointing" trapezium.

Some of the second sets of weights of the relaxed recursive model may be initialized based on at least one layer of the pre-existing neural network 410 and/or the first set of weights of at least one layer of the recursive model. In this case, the corresponding trapezia in Fig. 4 are colored (patterned) according to the color(s) of the corresponding layer of the neural network 410 or the recursive model.

In some examples, the second set of weights for a self-attention layer is set by standard zero initialization. For example, standard zero initialization may be used in the case of a layer of the relaxed recursive network which has the same depth in the relaxed recursive network as the depth in the pre-existing network of the layer from which the first set of weights of the layer were derived (for example, in neural network 450, the third layer (Layer 456) of the second layer block is at depth 6 in neural network 450, which is the same depth as the layer 6 from which the first set of weights of the third layers (Layer 456) of the layer blocks are derived). For standard zero initialization, the system uses a random Gaussian matrix for the first matrix A, and zeros for the second matrix B.

In the example of FIG. 4, A matrices of each particular layer are colored according to the corresponding layer of the neural network 410 that is at the same depth as the particular layer. As an example, the first layer of the second layer block in neural network 450 is at the same depth (4) as Layer 4 of the neural network 410 and the A matrix thus has the same color as Layer 4. For example, the second layer of the second layer block in neural network 450 is at the same depth (5) as Layer 5 of the neural network 410 and the A matrix thus has the same color as Layer 5.

B matrices of each particular layer are colored according to the layer of the recursive model (e.g., the corresponding neural network 420, 430, or 440) that is at the same position within the layer block as the particular layer. For example, the first layer in the second layer block of neural network 450 is at the same position (1) as the layer 422 of neural network 420 and the B matrix thus has the same color as layer 422. As another example, the second layer of the second layer block of neural network 450 is at the same position (2) as the layer 424 of neural network 420 and the B matrix thus has the same color as layer 424.

In cases where the corresponding first set of weights are initialized to have the same weights as one corresponding layer of the pre-trained neural network 410 (e.g., this is the case for the neural network 450 and the neural network 470), and the first set of weights for the self-attention layer was initialized from a corresponding layer of the neural network 410 that has a same depth in the neural network 410 as the depth of the self-attention layer in the overall sequence of layer blocks, the B matrix of the second set of weights are set by zero initialization, and are shown using white B matrices. For example, the first layer in the first layer block of neural network 450 is at depth 1, and the set of weights for the layer was initialized from Layer 1 (which has a depth of 1) of the neural network 410. As another example, the third layer in the second layer block of neural network 450 is at depth 6, and the set of weights for the layer was initialized from Layer 6 (which has a depth of 6) of the neural network 410.

In the example of FIG. 4, the neural network 450 corresponds to the neural network 420 in that the self-attention layers 452-456 each include a first set of weights initialized from layers 1, 3, and 6, respectively, of the neural network 410.

For example, for the self-attention layer 452, for the first layer block, the first set of weights is initialized from Layer 1 of the neural network 410, and the depth of the layer 452 in the overall sequence of layer blocks, i.e., the first layer, matches the depth of the corresponding Layer 1 of the neural network 410. Thus, the second set of weights for the first layer block is initialized using a standard zero initialization. The second set of weights for the second layer block is initialized using the SVD initialization described with reference to FIGS. 7-8. For example, the LoRA module is initialized based on the difference between the first set of weights for layer 422 of the recursive model 420 and Layer 4 of the pre-trained neural network 410.

For the layer 454, the second set of weights for the first layer block is initialized using SVD initialization, e.g., based on the difference between the first set of weights for Layer 2 of the pre-trained neural network 410 and layer 424 of the recursive model 420. The second set of weights for the second layer block is initialized using SVD initialization, e.g., based on the difference between the first set of weights for Layer 5 of the pre-trained neural network 410 and layer 424 of the recursive model 420.

For the layer 456, the second set of weights for the first layer block is initialized using SVD initialization, e.g., based on the difference between the first set of weights for Layer 3 of the pre-trained neural network 410 and layer 426 of the recursive model 420. For the second layer block, the first set of weights is initialized from Layer 6 of the neural network 410, and the depth of the layer 456 in the overall sequence of layer blocks, i.e., the sixth layer, matches the depth of the corresponding Layer 6 of the neural network 410. Thus the second set of weights for the second layer block is initialized using a standard zero initialization.

In the example of FIG. 4, the neural network 460 corresponds to the neural network 430 in that the self-attention layers 462, 464, and 466 each include a first set of weights initialized from combining the sets of weights for two layers of the neural network 410.

For the layer 462, the second set of weights for the first layer block is initialized using SVD initialization, e.g., based on the difference between the first set of weights for Layer 1 of the pre-trained neural network 410 and layer 432 of the recursive model 430. The second set of weights for the second layer block is initialized using SVD initialization, e.g., based on the difference between the first set of weights for Layer 4 of the pre-trained neural network 410 and layer 432 of the recursive model 430.

For the layer 464, the second set of weights for the first layer block is initialized using SVD initialization, e.g., based on the difference between the first set of weights for Layer 2 of the pre-trained neural network 410 and layer 434 of the recursive model 430. The second set of weights for the second layer block is initialized using SVD initialization, e.g., based on the difference between the first set of weights for Layer 5 of the pre-trained neural network 410 and layer 434 of the recursive model 430.

For the layer 466, the second set of weights for the first layer block is initialized using SVD initialization, e.g., based on the difference between the first set of weights for Layer 3 of the pre-trained neural network 410 and layer 436 of the recursive model 430. The second set of weights for the second layer block is initialized using SVD initialization, e.g., based on the difference between the first set of weights for Layer 6 of the pre-trained neural network 410 and layer 436 of the recursive model 430.

In the example of FIG. 4, the neural network 470 corresponds to the neural network 440 in that the self-attention layers 472, 474, and 476 each include a first set of weights initialized from layers 1, 2, and 3 of the neural network 410.

For the layer 472, for the first layer block, the first set of weights is initialized from Layer 1 of the neural network 410, and the depth of the layer 472 in the overall sequence of layer blocks, i.e., the first layer, matches the depth of the corresponding Layer 1 of the neural network 410. Thus the second set of weights for the first layer block is initialized using a standard zero initialization. The second set of weights for the second layer block is initialized using the SVD initialization described with reference to FIGS. 7-8. For example, the LoRA module is initialized based on the difference between the first set of weights for Layer 4 of the pre-trained neural network 410 and layer 442 of the recursive model 440.

For the layer 474, for the first layer block, the first set of weights is initialized from Layer 2 of the neural network 410, and the depth of the layer 474 in the overall sequence of layer blocks, i.e., the second layer, matches the depth of the corresponding Layer 2 of the neural network 410. Thus the second set of weights for the first layer block is initialized using a standard zero initialization. The second set of weights for the second layer block is initialized using SVD initialization, e.g., based on the difference between the first set of weights for Layer 5 of the pre-trained neural network 410 and layer 444 of the recursive model 440.

For the layer 476, for the first layer block, the first set of weights is initialized from Layer 3 of the neural network 410, and the depth of the layer 476 in the overall sequence of layer blocks, i.e., the third layer, matches the depth of the corresponding Layer 3 of the neural network 410. Thus the second set of weights for the first layer block is initialized using a standard zero initialization. The second set of weights for the second layer block is initialized using SVD initialization, e.g., based on the difference between the first set of weights for Layer 6 of the pre-trained neural network 410 and layer 446 of the recursive model 440.

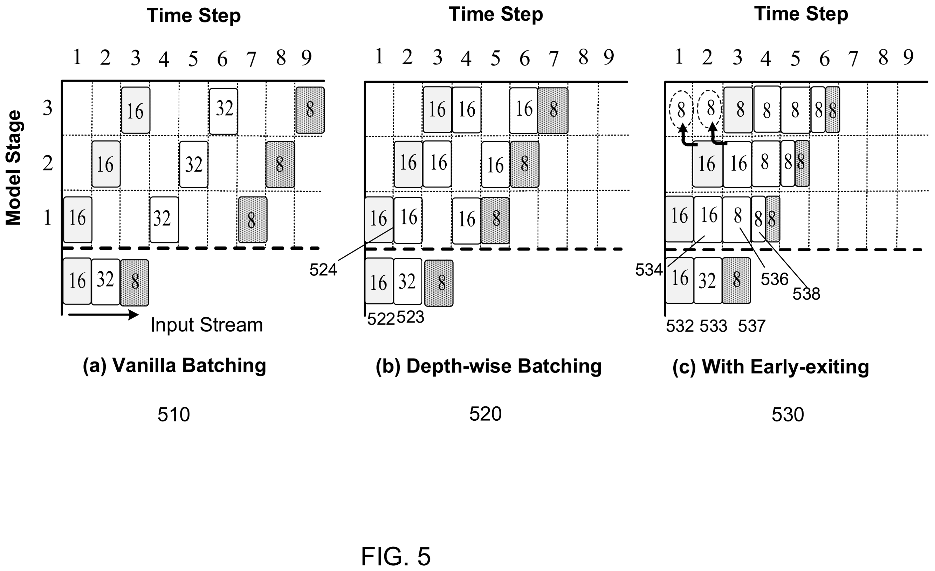

FIG. 5 shows a visualization of early exiting. In particular, FIG. 5 shows early exiting in examples where the output sequence generated using the neural network is one of multiple output sequences, where the multiple output sequences correspond to a batch of input sequences included in a batch. The multiple output sequences corresponding to a batch are being generated by the neural network in parallel according to a maximum batch size. FIG. 5 shows the number of output sequences being processed in a batch. Batches derived from the same larger batch are shown in shaded boxes.

The graph 510 shows that conventional techniques for generating multiple output sequences in parallel wait for all layer blocks, (referred to as "model stage" in FIG. 5), to complete before processing new input sequences, resulting in inefficient use of computational resources and high latency. The graph 510 shows an input stream of three batches of input sequences, each corresponding to a respective number of output sequences of 16, 32, and 8.

In some examples, the system described in this specification, by repeating processing over layer blocks, enables the simultaneous computation of different iterations of layer blocks for different output sequences, enabling the efficient use of computational resources and high throughput. Thus by continuously scheduling requests from batches in this manner, the system can operate the neural network at the maximum batch capacity to enhance serving efficiency.

For example, while processing the respective embeddings for the inputs in respective current input sequences for the multiple output sequences through each layer block after the first layer block until a termination criterion is satisfied, the system can process respective second embeddings for second inputs in respective second current input sequences for a second batch of multiple output sequences through each preceding layer block to generate a respective second output embedding for each second input.

The second batch of output sequences includes a number of output sequences such that a total number of input sequences being processed by the layer blocks is less than or equal to the maximum batch size.

In the example of FIG. 5, the graph 520 shows that at time step 2, while the first batch 522 of 16 input sequences are being processed by layer block 2 ("Model Stage 2"), the system can process the second batch 524 of 16 input sequences by layer block 1 ("Model Stage 1"), as long as the total number of input sequences being processed in parallel (at time step 2) does not exceed the maximum batch size 32.

In some examples, the second batch of multiple output sequences is part of a larger batch of output sequences. For example, at time step 2, the second batch 524 of 16 input sequences is part of the batch 523 of 32 input sequences. The second batch 524 has the same shading as the batch 523.

In some examples, the system described in this specification can further improve throughput using early-exiting. For example, once some output sequences early exit, queued requests to generate output sequences can be immediately scheduled. For example, in response to determining that the termination criterion is satisfied for one or more of the current input sequences, the system refrains from processing the respective embeddings for the inputs in the one or more current input sequences in subsequent layer blocks. The system processes respective third embeddings for third inputs in respective third current input sequences for a third batch of multiple output sequences through each preceding layer block to generate a respective third output embedding for each third input.

The third batch of multiple output sequences includes a number of output sequences such that a total number of input sequences being processed by the layer blocks is less than or equal to the maximum batch size.

In the example of FIG. 5, the graph 530 shows that at time step 2, 8 of the batch 532 have exited early. In this example, the second batch 534 includes 16 of the batch 533. The second batch 534 and the batch 533 have the same shading. The system can fill the available slots using a third batch 536 of multiple output sequences, e.g., 8 of the batch 533. The third batch 536 and the batch 533 have the same shading.

At time step 3, 8 of the second batch 534 have exited early. The system can fill the available slots using another batch of multiple output sequences, e.g., batch 538 which includes the remaining 8 of the batch 533 and the batch 537. The batch 538 and the batch 533 have the same shading.

The system can continue performing depth-wise batching with early-exiting for any remaining batches of output sequences. The system can thus keep the neural network's batch utilization high across the layer blocks.

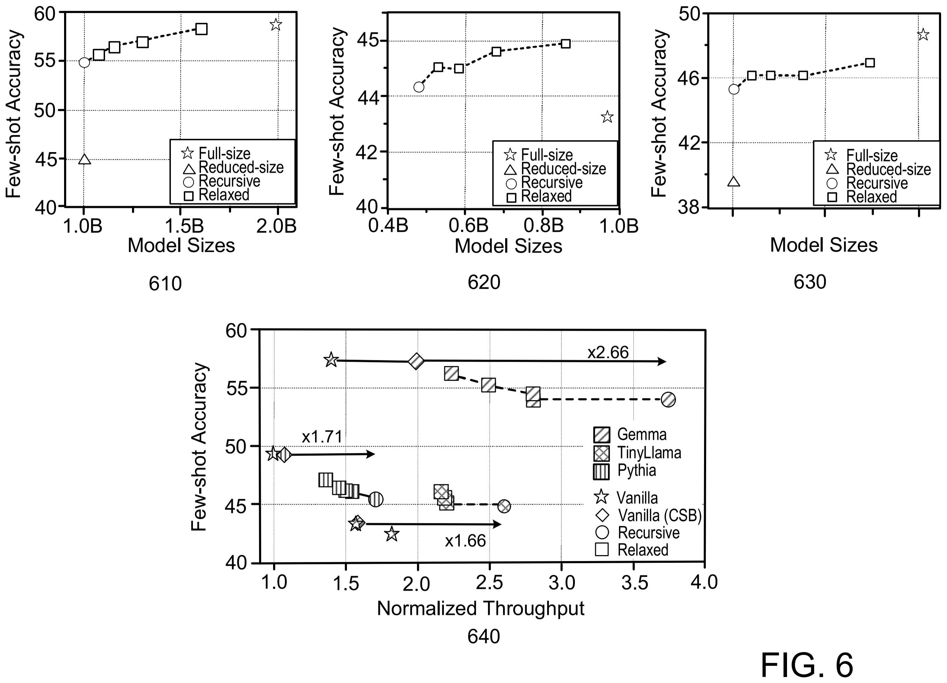

FIG. 6 shows the performance of example task performance systems. The example task performance systems can include neural networks as described above with reference to FIGS. 1-5.

For example, the graphs 610, 620, and 630 show the performance of example task performance systems in terms of few-shot accuracy and model size, compared to conventional techniques. The example task performance systems include a recursive model ("Recursive") and a relaxed model ("Relaxed") with 1B parameters. The conventional techniques include a full-size model ("Full-size") with 2B parameters and a reduced-size model ("Reduced-size") that has a similar number of parameters as the recursive model and the relaxed model. Each of the graphs 610, 620, and 630 show results for a different model architecture. The graphs 610, 620, and 630 show that the recursive and relaxed models outperform the similar-sized "Reduced-size" models, and achieve higher few-shot accuracy or few-shot accuracy that approaches the few-shot accuracy of the full-size model, while having a smaller model size than the reduced-size model.

The graph 640 shows the performance of example task performance systems in terms of few-shot accuracy and normalized throughput, compared to conventional techniques. The example task performance systems include a recursive model ("Recursive") and a relaxed model ("Relaxed") that is configured to early exit. The conventional techniques include a full-size model ("Full-size") and a reduced-size model ("Reduced-size"). The graph 640 shows that early exiting enables throughput improvements.

FIG. 7 shows an example neural network training system 700. The neural network training system 700 is an example of a system implemented as computer programs on one or more computers in one or more locations, in which the systems, components, and techniques described below can be implemented.

The neural network training system 700 is a system that trains neural networks such as the neural network 110 described above with reference to FIG. 1.

In particular, the system 700 can train the neural network 110 to generate the new neural network 110 starting from a pre-trained neural network 702.

The system obtains data specifying the pre-trained neural network 702. The pre-trained neural network 702 includes a sequence of layers 706a-n. The sequence of layers 706a-n can include, for example, self-attention layers. The pre-trained neural network 702 is configured to process, at each of multiple iterations, an input sequence of tokens for the iteration using each layer in the sequence of layers to generate an output sequence of tokens for the iteration.

The pre-trained neural network 702 can have been trained using a machine learning training technique, e.g., a gradient descent with backpropagation training technique that uses a suitable optimizer, e.g., stochastic gradient descent, RMSprop, Adam optimizer, or Adafactor optimizer, to optimize an objective function for a next token prediction task. For example, the system can train the neural network to optimize an objective function that, for each training example, measures an error (e.g., cross-entropy error) between (i) the ground-truth sequence of output tokens specified by the training example and (ii) the output tokens generated by the neural network for the training input specified by the training example.

The system identifies a subset of layers 710a-d derived from the sequence of layers 706an. As an example, the system can identify the subset of layers 710a-d to use to initialize first sets of weights of the new neural network 110, as described above with reference to FIG. 4.

The system generates the new neural network 110. The new neural network 110 includes multiple layer blocks 120a-b. Each layer block includes a sequence of layers 122a-k. The sequence of layers 122a-k includes a respective layer at each of multiple positions in the sequence of layers 122a-k. A respective first set of weights 724a-k for the respective layers are derived from respective pre-trained sets of weights for the subset of layers 710a-d.

The new neural network 110 is configured to process, at each of multiple iterations, an input sequence of tokens for the iteration using each layer block to generate an output sequence of tokens for the iteration.

The system can generate the new neural network 110 by training the new neural network, including the respective first set of weights 724a-k for the respective layers, using a training engine 720. For example, the training engine 720 can train the new neural network using training examples 730.

The training examples 730 include multiple training examples that each include a training input and a corresponding target output. Each training input can include one or more tokens and the corresponding target output can include a ground-truth sequence of output tokens following the training input. In some implementations, the training examples can have been obtained from the same or a similar dataset that was used to train the pre-trained neural network 702.

The system can train the new neural network using a machine learning training technique, e.g., a gradient descent with backpropagation training technique that uses a suitable optimizer, e.g., stochastic gradient descent, RMSprop, Adam optimizer, or Adafactor optimizer, to optimize an objective function.

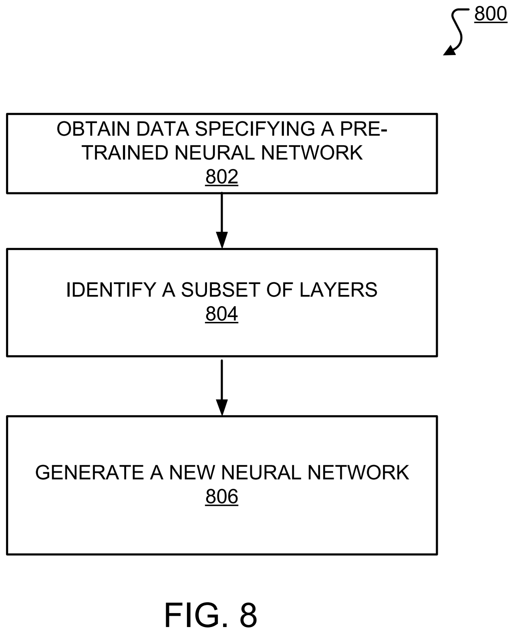

In some implementations, the training engine 720 can further train the new neural network by performing uptraining for the new neural network, i.e., to mitigate potential performance degradation due to parameter sharing. For example, as part of uptraining, the training engine 720 can update the pre-trained sets of weights for the subset of layers 710a-d into the respective first set of weights 724a-k. In examples where each layer of each layer block includes a respective second set of weights, the training engine 720 can train the respective second sets of weights as part of uptraining. Determining the respective first sets of weights and the respective second sets of weights is described in further detail below with reference to FIG. 8.

In these implementations, the objective function can include a cross-entropy loss term. For example, the system can train the neural network to optimize an objective function that, for each training example, measures an error (e.g., cross-entropy error) between (i) the ground-truth sequence of output tokens specified by the training example and (ii) the output tokens generated by the neural network for the training input specified by the training example.

In some implementations, the training engine 720 can further train the new neural network by performing early exit training for the new neural network, i.e., to improve the quality of outputs generated when using early exiting. For example, the training engine 720 can train the neural network to generate a high-quality output at a layer block that is not the last layer block in the sequence of layer blocks.

In these implementations, the system can evaluate the objective function based on outputs of different potential exit points, e.g., the outputs of intermediate layer blocks. For example, the objective function can be based on a loss for each of one or more different potential exit points. For example, the different potential exit points of the new neural network 110 can include the last self-attention layer in each layer block. That is, the objective function can be based on a loss based on an output of each of one or more intermediate layer blocks of the new neural network 110.

In some examples, the objective function can include a combined cross-entropy error over the cross-entropy errors at different potential exit points of the new neural network 110.

As an example, the objective function can include a weighted cross-entropy loss $\mathcal{L} = \sum_{i=1}^{B} \alpha_i \mathcal{L}_i$ where $\alpha_i = i/\Sigma_i\, i$ where $L_i$ represents the loss at each potential exit point and $\alpha_i$ is a corresponding loss coefficient. In examples where each potential exit point is the last self-attention layer in each layer block, $L_i$ represents the loss at each layer block. Thus, the loss function is a weighted sum of loss terms $L_i$ for respective layer blocks, and the weights of the losses at each potential layer block (exit point) can successively increase.

In some examples, the system reduces the loss coefficient, e.g., 0.1, for intermediate outputs (potential exit points at intermediate layer blocks) while maintaining a higher coefficient, e.g., 1, for the final output (at the last self-attention layer of the last layer block). Thus, the system can align intermediate hidden states with the output subnetwork without compromising the performance of the last layer block.

In some examples, the system can train the neural network using knowledge distillation. For example, the objective function can include a knowledge distillation loss term, e.g., a Kullback-Leibler (KL) divergence, a Jensen-Shannon divergence, a total variation distance, etc. The distillation loss term can measure the similarity between the probability distribution generated at the potential exit point and the probability distribution generated at the last self-attention layer of the last layer block. The probability distributions can be the probability distributions from which tokens are selected. Thus, by training the neural network on an objective function that includes a cross-entropy loss term and a knowledge distillation loss term, the system can train the neural network to generate accurate outputs at intermediate layers, as well as to generate probability distributions that are similar to probability distributions generated by the last self-attention layer of the last layer block. The system can thus achieve high levels of performance while being trained on a smaller number of tokens than the pre-trained neural network 702.

In some implementations, prior to performing early exit training (e.g., training to improve the quality of outputs generated when using early exiting), the system can perform uptraining (e.g., training to determine a respective first set of weights for each self-attention layer). For example, the system can train the neural network to determine the first set of weights, the second set of weights, or both, for the respective self-attention layers in each of the layer blocks during uptraining. The system can further update the neural network, including the first set of weights, the second set of weights, or both, for the respective self-attention layers in each of the layer blocks, during early exit training.

In some other implementations, the system can simultaneously perform early exit training and uptraining.

In some examples, the system trains the neural network 110 on different subsets of the training examples 730 for uptraining and early exit training, respectively. In some other examples, the system trains the neural network 110 for uptraining and early exit training using overlapping subsets of the training examples 730.

In some implementations, the system 700 can be a component of the system 100 described above with reference to FIG. 1.

FIG. 8 is a flow diagram of an example process 800 for generating a new neural network. For convenience, the process 800 will be described as being performed by a system of one or more computers located in one or more locations. For example, a neural network training system, e.g., the neural network training system 700 of FIG. 7, appropriately programmed, can perform the process 800.

The system obtains data specifying a pre-trained neural network (step 802). The pre-trained neural network includes a sequence of layers.

The system identifies a subset of layers (step 804). In particular, the system identifies a subset of layers derived from the sequence of layers of the pre-trained neural network.

The system generates a new neural network (step 806). The new neural network includes multiple layer blocks. Each layer block includes a sequence of layers that includes a respective layer at each of multiple positions in the sequence of layers.

A respective first set of weights for the respective layers (i.e. a respective first set of weights for each group of layers, as defined above) are derived from respective pre-trained sets of weights for the subset of layers. The neural network can be configured to process, at each of multiple iterations, an input sequence of tokens for the iteration using each layer block in accordance with the respective first set of weights for each layer.

As an example, the subset of layers can include a last layer of the sequence of layers, and one or more preceding layers of the sequence at a predetermined interval. In some of these examples, the subset of layers can also include a first layer of the sequence of layers. In these examples, the respective first set of weights for the respective layers can be initialized from the respective pre-trained sets of weights for the layers of the subset of layers.

As another example, the subset of layers can include two or more layers from the sequence of layers. In some of these examples, the respective first set of weights for each respective layer can be initialized by combining two or more of the respective pre-trained sets of weights for the layers of the subset of layers.

As another example, the subset of layers can include one or more earlier layers, e.g., the first K layers, from the sequence of layers.

In some implementations, the first set of weights for each respective self-attention layer in each layer block are randomly initialized.

Other examples of initializing the first set of weights are described in further detail above with reference to FIG. 4.

The system can generate the new neural network by training the new neural network on multiple training examples while tying, e.g., without modifying, the respective first set of weights for each respective layer at a same position in each layer block. Rather than each of the layers of the model having its own unique set of weights, a single, smaller set of weights is used repeatedly at the same position in each layer block, saving the computational resources that would otherwise be required to store unique sets of weights for each layer. In some examples, all trainable parameters are tied, i.e., the first set of weights can include the weights of the linear layers and the RMSNorm layers within the self-attention neural network layer.

The system can determine the first set of weights by training the neural network on multiple training examples, e.g., by a training system as described above with reference to FIG. 7, starting from the initialized first set of weights. Thus, by initializing the weights for the respective self-attention layers from a subset of the pre-trained model's parameters, and fine-tuning the resulting recursive model for a small number of uptraining steps, the system can mitigate the potential performance degradation associated with parameter sharing and achieve a strong level of performance with minimal training time.

The system can train the neural network using a machine learning training technique, e.g., a gradient descent with backpropagation training technique that uses a suitable optimizer, e.g., stochastic gradient descent, RMSprop, Adam optimizer, or Adafactor optimizer, to optimize an objective function for a next token prediction task, as described above with reference to FIG. 7.

In some implementations, each self-attention layer includes a respective second set of weights. The new neural network is configured to process, at each of multiple iterations, an input sequence of tokens for the iteration using each layer block in accordance with the respective second set of weights for each layer.

The system can learn the respective second sets of weights by training the new neural network on a second set of multiple training examples. In some implementations, the second set of multiple training examples does not overlap with the set of multiple training examples used to train the new neural network to determine the first sets of weights. In some implementations, the second set of training examples has overlap with the set of multiple training examples used to train the new neural network to determine the first sets of weights.

In some implementations, the system can train the new neural network while holding the respective first sets of weights fixed. In some other implementations, the system can train the new neural network in order to determine the second sets of weights while training the new neural network in order to determine the first sets of weights.

The system can learn each respective second set of weights by training a respective low-rank approximation of weights representative of updates to the neural network, e.g., to use as the one or more weight update matrices.

The system can use the low-rank approximation to approximate an update to the self-attention layer weights during each training update of the neural network, e.g., by optimizing a product of two smaller matrices in order to reduce the dimensionality of the calculation required to compute the change in weights required by the update. More specifically, performing a low-rank approximation can refer to breaking up a matrix containing a set of target update weights identified for updating into a product of two smaller matrices that when multiplied together can recover the values of the neural network weights with high fidelity.

For example, the system can identify a set of target update weights that includes a subset of weights of the new neural network. For example, the system can identify a set of target update weights that includes a subset of weights of the first set of weights W' for the respective self-attention layer. For example, the set of target update weights can include the first set of weights W'.

The system can receive a target rank r specifying a dimensionality of the respective low-rank approximation of weights.

The system can represent an update approximation for training updates to the target update weights using matrix decomposition in accordance with the target rank. The matrix decomposition can include a first matrix *A* and a second matrix *B,* that each include values derived from a singular value decomposition of one or more sets of weights for the sequence of layers of the pretrained neural network, and one or more sets of weights for the respective layers new neural network. For example, the singular value decomposition can be performed using a respective first set of weights W' and a corresponding pre-trained set of weights W of a pre-trained neural network.

For example, the right singular vectors $V_r^\ell$, left singular vectors $U_r^\ell$, and singular values $\Sigma_r^\ell$ can be determined as $U_r^\ell, \Sigma_r^\ell, V_r^\ell = \text{Truncated SVD}\big(W_\ell - W'_{((\ell-1) \bmod L/B)+1}; r\big), \ell \in [1, L]$. That is, for each layer 1 in the pre-trained neural network, the system can determine the difference between the pre-trained weight matrix for the layer and the first set of weights of the new neural network at the equivalent depth in the sequence of layer blocks to the layer 1. The system can perform a truncated SVD on the difference with a target rank of r to determine the left singular vectors, right singular vectors, and singular values.

In some examples, the first matrix A can include values derived from right singular vectors of the singular value decomposition. The second matrix B can include values derived from left singular vectors and singular values of the singular value decomposition. For example, the system can initialize the weights of the first matrix A as the transpose of the right singular vectors $V_r$. The system can initialize the weights of the second matrix B as the product of the left singular vectors $U_r$ and the singular values $\Sigma_r$.

The system can update the first and second matrix by training with a second set of training examples to perform gradient updates in accordance with an objective function, e.g., for a next token prediction task.

The system can generate an approximation of the target update weights using the respective low-rank approximation of weights as the second set of weights.

In some implementations, the system can use a higher rank to approximate the weights of the pre-trained neural network more accurately, which can lead to better performance. For example, the system can approximate the pre-trained neural network as $Wx \approx W'x + (U_r \Sigma_r)(V_r^\top)x = W'x + BAx = W'x + \Delta W'x)$. In some other implementations, the system can use a lower rank, e.g., a rank of 0, to reduce the model to the "recursive" model described above, resulting in a smaller size. Thus the "relaxed" model provides flexibility by changing the rank parameter.

Examples of initializing a second set of weights are described in further detail above with reference to FIG. 4.

Some examples of machine learning tasks that the system can be configured to perform follow.

As one example, if the input to the neural network is a sequence of text in one language, the output generated by the neural network may be a sequence of text in another language that is proper translation of the input text into the other language.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text.

As another example, the input to the text generation task can be, or comprise, an input other than text, e.g., an image (a term used here to mean pixel-level data defining at least one intensity value for at least one multi-dimensional array of pixels; the image may for example be the output of a still or video camera arranged to capture the (still or moving) image by imaging part of the real world), and the output sequence can be text that describes the input. As another example, the input can include both text and other data, e.g., images.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text.

As another example, the task can be a computer code generation task, where the input is a sequence of text describing the functionality of a piece of computer code, or a sequence of computer code to be modified or completed, or both and the output is a sequence of computed code that modifies the computer code, that has the functionality that is described by the sequence of text, or both.

As another example, the task can be an image generation task, where the input is a conditioning input, and the output is a sequence of intensity value inputs for the pixels of an image.

As another example, the task can be a health prediction task, where the input is electronic health record data for a patient (e.g. comprising one or more numerical measurements which have been made of the patient and/or one or more medical images of the patient) and the output is a prediction that is relevant to the future health of the patient, e.g., a predicted treatment that should be prescribed to the patient, the likelihood that an adverse health event will occur to the patient, or a predicted diagnosis for the patient.

As another example, the task can be an agent control task, where the input is a sequence of observations or other data characterizing states of an environment (e.g. a real-world environment), and the output defines an action to be performed by the agent in response to the most recent data in the sequence. The agent can be, e.g., a real-world or simulated robot (that is, an electromechanical apparatus), a control system for an industrial facility, or a control system that controls a different kind of agent.

As another example, the task may be an audio processing task of processing an input which comprises an audio signal (such as sound samples captured from the real world by a microphone), e.g. to generate an outcome descriptive of content of the audio signal.

For example, if the input to the neural network is a sequence representing a spoken utterance, the output generated by the neural network may be a text transcript for the utterance.

As another example, if the input to the neural network is a sequence representing a spoken utterance, the output generated by the neural network can indicate whether a particular word or phrase ("hotword") was spoken in the utterance.

As another example, the task can be a text to speech task, where the input is text in a natural language or features of text in a natural language and the network output is a spectrogram, a waveform, or other data defining audio of the text being spoken in the natural language. As a particular example of this, the system can perform speaker-conditioned text-to-speech, where the input is a text transcript and audio of a speaker, and the output is a verbalization of the text transcript being spoken by the speaker.

As another example, the task may be an audio generation task for generating an output audio signal (e.g. a set of sound samples (e.g. amplitude or Fourier components) at each time point of a plurality of time points within a time period). For example, the output audio signal can be a speech signal and the system can generate the speech signal unconditionally, e.g., resulting in a speech signal being generated that is drawn from a distribution represented by the training data set(s) on which the neural network was trained. As another example, the output audio signal can be a different type of audio signal, e.g., music, ambient sounds, sound events, and so on, and the system can generate the audio signal unconditionally, e.g., resulting in an audio signal being generated that is drawn from a distribution represented by the training data set(s) on which the neural network was trained.

As another example, the system can receive a context to generate an audio signal and generate the output audio signal conditioned on the received context.

For example, the output audio signal can be a speech or other audio signal, i.e., so that the system generates the output audio signal conditioned on a context that is an input audio signal.

For example, the context can include an audio input as an input audio signal. In some examples, the audio input can include words spoken by a particular speaker, and the output audio signal can be a continuation of the words spoken by the particular speaker. In some examples, the audio input can include music, and the output audio signal can be a continuation of the music in the audio input.

In some implementations, the output audio signal that is generated can be a prediction of an audio signal that follows the input audio signal. For example, the context can be an input speech signal that is a question that is asked by one speaker and the output audio signal can be an output speech signal that is an answer to the question spoken by the same speaker or another speaker. As another example, the context can be an input speech signal that is a first portion of an utterance spoken by one speaker and the input audio signal can be an output speech signal that is a completion of the utterance spoken by the speaker or by another speaker or a response to the input utterance.

In some implementations, the input audio signal can include a melody, and the output audio signal can be music that follows the melody. The system can generate an output audio signal that is music that follows the melody.

As another example, the system can perform sound separation on the input audio signal to generate the output audio signal. For example, the input audio signal can include both speech and music or other background noise and the output audio signal can represent only the speech.

As another example, the input audio signal can include speech from multiple speakers (and optionally background noise) and the output audio signal can include only the speech of one of the speakers. In some examples, the system can perform audio-conditional separation, i.e., when the input audio signal can include an extra audio input acoustically similar to one of the sources.

As another example, the system can perform speech-to-speech translation, where the input speech and the output speech represent the same semantic content but spoken differently. For example, the input audio signal can include speech in one natural language and the output audio signal can represent speech in a target, different natural language that is a translation of the input speech into the target language. As another example, the input audio signal can include speech spoken by a first speaker and the output audio signal can represent the same semantic content as the input speech but spoken by a different speaker. As another example, the input audio signal can include a first speech segment and the output audio signal can include a second, shorter speech segment that summarizes the semantic content of the first speech.

As another example, the context can include both audio data and text data. In this example, the output audio signal can include speech that reflects the text data. In some implementations, the output audio signal can include music that reflects the text data. In these implementations, the system generates an output audio signal that reflects the text data.

For example, the system can perform transcript conditioned speech enhancement, where the context is a text transcript and noisy audio corresponding to the text transcript and the output audio signal is clean audio corresponding to the text transcript.

As another example, the system can perform transcript-based audio in-filling, where the context is a text transcript and audio corresponding to a portion of the text transcript, and the output audio signal corresponds to a different portion of the text transcript.

As another example, the context can include both audio data and visual, e.g., image or video, data. In this example, the output audio signal can include speech that describes the visual data or music that reflects the visual data.

For example, the system can perform audio-video continuation, where the system receives a partial audio track with corresponding video, and the output audio signal is a continuation of the partial audio track.

As another example, the system can perform cross-modal in-filling, where the system receives video and an audio track corresponding to a portion of the video and the output audio signal is an audio track corresponding to a different portion of the video.

As another example, the context input can include only visual data.

For example, the system can perform image-conditioned audio generation, where the system receives an input image and generates an output audio signal that describes the image.

As another example, the context input can include only text data.

For example, the system can perform sound synthesis based on text descriptions, e.g., where the input is text that describes an audio signal, and the output is an output audio signal that is characterized by the text.

Additional description of tasks that the neural network (e.g., a "generative" neural network) can perform now follow.

Generally, the generative neural network is configured to process a conditioning input ("input prompt") to generate a data item. Generally, the data item represents a response to the conditioning input which may be, e.g. a "prompt" for the generative neural network. For example, the conditioning input can characterize one or more desired properties for the generated data item.

In some implementations the method is adapted to run on parallel processing computer system comprising a plurality of hardware computing devices configured to operate in parallel. Each hardware computing device may comprise a neural network accelerator, i.e. specialized hardware that is used to accelerate neural network computations, such as a GPU (Graphics Processing Unit) or TPU (Tensor Processing Unit). In general, a neural network accelerator is configured to perform hardware matrix multiplications; it can include a set of one or more multiply accumulate units (MACs). For example, the system can deploy multiple instances of the neural network across multiple devices and use the instances to parallelize the generation of the outputs.

In some implementations the generative neural network generates an output token sequence from an input token sequence including the conditioning input. The generative neural network may then be configured to process the input token sequence to generate for each position in the output token sequence, a respective score for each token in a vocabulary of output tokens, that is used to select an output token for the output token sequence.

In some implementations the tokens can represent text, e.g., words, wordpieces or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data that represent speech corresponding to the text.

Also, or instead the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network.

Also, or instead the tokens may represent an audio waveform. For example, a set (sequence) of input or output tokens can represent audio data representing a waveform e.g. instantaneous audio amplitude values or time-frequency audio data. Each image token may comprise a block encoding of the audio waveform in a different time segment of the audio that maps a set of values representing the audio waveform to a respective image token. The block encoder may comprise a neural network, e.g. having one or more (self-)attention layers, such as a Transformer neural network.

In a multimodal system audio data or an image may be flagged by a start-of-audio token or start-of-image token.

In some implementations the generative neural network can be a multimodal network that is configured to process a conditioning input comprising one or more of text data, audio data defining an audio signal (e.g. as amplitude values of the audio signal or as a time-frequency representation of the audio signal), or a still or moving image (e.g. as image pixel values), to generate a data item that can similarly comprise text data, audio data, or a still or moving image.

For example, the conditioning input may comprise text and the data item may comprise an image or an audio signal that represents speech an image generated in response to the text, e.g. described by the text. Also, or instead the conditioning input may comprise an audio signal that represents speech, or an image, and the data item may comprise text, e.g. that describes the conditioning input.

As another example the conditioning input may comprise an observation, e.g. of a real world environment, e.g. from a sensor such as a camera or other image sensor; and optionally additional information such as information defining a particular task to be deformed. The output data item may comprise agent control data that defines one or more actions to be performed by an agent, e.g. by a mechanical agent such as a robot or autonomous vehicle, to perform a task. The reward model(s) may, e.g., define a preferred trajectory of motion of the mechanical agent in the (real-world) environment.

In some implementations the generative neural network may comprise a language and/or image generation neural network, that may have been trained before being fine-tuned by the above described method. The conditioning input may comprise a prompt, e.g. a natural or computer language prompt for the generative neural network. The generated data item may comprise a natural or computer language and/or image response to the prompt.

In general, the generative neural network can have any appropriate architecture for processing the conditioning input to generate the data item.

As one example, the generative neural network may comprise an auto-regressive generative model (e.g., a Transformer, a recurrent neural network, etc.) that can auto-regressively generate an output sequence as the data item based on the conditioning input. The generative model can, for example, comprise a large language model (LLM) that can auto-regressively generate tokenized representations of text data, a vision-language model (VLM) that can autoregressively generate tokenized representations of image or video data, e.g. in response to a text conditioning input or that can auto-regressively generate tokenized representations of text, e.g. in response to an image conditioning input, an audio language model that can auto-regressively generate tokenized representations of text data, or a multimodal model that can that can generate tokens representing any of text, image or audio, e.g. in response to a conditioning input comprising any of text, image or audio, and so forth.

As another example, the generative neural network may comprise a diffusion model (e.g., a denoising diffusion model, a score-based diffusion model, a latent diffusion model, etc.) that can generate the data item by repeatedly transforming samples from a noise distribution (e.g., a Gaussian distribution) based on the conditioning input over a sequence of iterations. For example, the generative neural network may comprise a diffusion model that transforms samples from the noise distribution using a denoising neural network with any appropriate architecture (e.g., a convolutional neural network, a recurrent neural network, etc.). Such a diffusion model may be used to generate, e.g., a still or moving (video) image.

As another example, the generative neural network may comprise a neural network that can generate the data item by transforming samples from a noise distribution (e.g., a Gaussian distribution). The generative neural network may comprise, e.g., a generator network of a generative adversarial network, a decoder of a variational auto-encoder, a normalizing flow, and so on.

As used herein an image may be any still or moving image, i.e. the image may be part of a video, in 2D or 3D, and may be a monochrome, color or hyperspectral image, i.e. comprising monochrome or color pixels. As defined herein an "image" includes a point cloud e.g. from a LIDAR system, and a "pixel" includes a point of the point cloud. An image may have been captured by a camera or other image sensor from the real world; and objects in the image may comprise physical objects, represented by the image.

According to another aspect, there is provided a system that includes one or more computers and one or more storage devices communicatively coupled to the one or more computers and storing instructions that, when executed by the one or more computers, cause the one or more computers to perform operations of the previously described method.

According to another aspect, there is provided one or more non-transitory computer storage media storing instructions that when executed by one or more computers cause the one or more computers to perform operations of the previously described method.

Example hardware implementations

In some implementations the generative neural network, e.g. a language model or a visual language model, is stored on a user computing device, i.e. a device local to the user, such as a mobile device e.g. a mobile phone, or a smart speaker.

In some implementations the generative neural network is implemented on a remote server in communication with a user computing device over a wired or wireless network communications link between the user computing device and the server.

The user computing device may be provided with an input mechanism, such as a text or voice interface, that enables user input from the user in a natural language. The user computing device may be provided with an output mechanism that provides a system output for the user in the or another natural language e.g. as speech or text; or in some other way, e.g. by displaying an image. The input and output mechanism may comprise, e.g., a keyboard, microphone, speaker, display, and/or camera.

As an example, the input mechanism may comprise a system configured to input audio data characterizing a speech waveform of speech representing the input from the user in a natural language and configured to convert the audio data into tokens representing the speech in the natural language, e.g. representing a transcription of the spoken input. The output mechanism may comprise a system configured to receive tokens representing the output for the user in the or another natural language and a system configured to convert the received tokens into audio data representing a waveform of speech representing the output to the user in the natural language, i.e. representing spoken words.

As a further example, the trained system can be deployed in an environment that enables a user to provide a request for the system, e.g. to process a multimodal conditioning input to generate a corresponding data item output. A user can provide the request, e.g., by way of a user interface or through an application programming interface (API). The request can be transmitted from a user device, e.g., over a data communications network such as the internet, to one or more computers implementing the system, e.g., in a data center. The system can generate a data item and then transmit the data item to a user device over a data communications network.

Example multimodal applications

The generative neural network may comprise a multimodal machine learning system such as a visual language model (VLM). That is, implementations of the generative neural network can perform a multimodal task in which the conditioning input and data item, collectively, comprise data of multiple different types. As used herein text can include numbers, punctuation, special symbols, and so forth.

In some implementations, after training, a particular task that is to be performed by the generative neural network can be described by part or all of a sequence of text in the conditioning input to the system. For example, in a conditioning input that includes an image such a prompt might specify "Generate a caption", "Generate a description", "Answer the following question: [about the image or video]", or "Detect a person". Where the system is used for an agent control task a prompt may define "Take the knife out of the drawer", or "Q: What action should the robot take to take the knife out of the drawer?". Also, or instead such a prompt may give one or more examples of a task to be performed. The generative neural network can be trained on multiple natural and/or computer languages and the prompt may then specify a language to use.

This specification uses the term "configured" in connection with, or in relation to, systems and environments, as well as computer program components. For a system of one or more computers or environment to be configured to perform particular operations or actions means that the system has installed on it software, firmware, hardware, or a combination of them that in operation cause the system to perform the operations or actions. For instance, configuring a system might involve installing a software library with specific algorithms, updating firmware with new instructions for handling data, or adding a hardware component for enhanced processing capabilities. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in various forms, including digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a storage device such as a machine-readable storage device, a hard drive or solid-state drive (SSD), a storage medium, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode, e.g., carry, information for transmission to suitable receiver apparatus, e.g., a receiving device or system, for execution by a data processing apparatus. Furthermore, implementations may leverage emerging technologies like quantum computing or neuromorphic computing for specific applications, and may be deployed in distributed or cloud-based environments where components reside on different machines or within a cloud infrastructure.

The term "data processing apparatus" refers to data processing hardware and encompasses all kinds of apparatus, devices, and machines for processing data, including by way of example a programmable processor or processing unit, a computer, multiple processors or computers, e.g., working together, graphics processing units (GPUs), or tensor processing units (TPUs). The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations, e.g., located at a single site or distributed across multiple locations. In some cases, one or more computers will be dedicated to a particular engine; in other cases, multiple engines can be installed and running on the same computer or computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be performed by one or more programmable computers executing one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. The processes and logic flows can also be performed by special purpose logic circuitry, e.g., an FPGA or an ASIC, or by a combination of special purpose logic circuitry and one or more programmed computers, for even greater performance or energy efficiency in specific use cases.

Computers suitable for the execution of a computer program can be based on general or special purpose microprocessors or both, or any other kind of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Generally, a central processing unit will receive instructions and data from a read only memory or a random access memory or both. The essential elements of a computer are a central processing unit for performing or executing instructions and one or more memory devices for storing instructions and data. The specific configuration of processing units and memory will depend on factors like the complexity of the AI model, the volume of data being processed, and the desired performance and latency requirements. The central processing unit and the memory can be supplemented by, or incorporated in, special purpose logic circuitry. Generally, a computer will also include, or be operatively coupled to receive data from or transfer data to, or both, one or more mass storage devices for storing data, e.g., hard drives, SSDs, flash memory for persistent data storage, magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few. Embodiments can be implemented on a wide range of computing platforms, from small embedded devices with limited resources to large-scale data center systems with high-performance computing capabilities.

Computer readable media suitable for storing computer program instructions and data include all forms of non volatile memory, media and memory devices, including by way of example semiconductor memory devices, e.g., EPROM, EEPROM, read-only memory (ROM), solid-state drives (SSDs), and flash memory devices; magnetic disks, e.g., internal hard disks or removable disks or hard disk drives (HDDs); magneto optical disks; and optical discs such as CD ROM and DVD-ROM disks and Blu-ray discs. The specific type of computer-readable media used will depend on factors such as the size of the data, access speed requirements, cost considerations, and the desired level of portability or permanence.

To provide for interaction with a user, embodiments of the subject matter described in this specification can be implemented on a computer having a display device, e.g., a CRT (cathode ray tube) or LCD (liquid crystal display) monitor or an organic light-emitting diode (OLED) display, for displaying information to the user and a key vectorboard and a pointing device, e.g., a mouse or a trackball, keyboard, touchscreens, voice commands, gesture recognition, or other input modalities depending on the specific device and application, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device or application that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return. The selection of input and output modalities will depend on the specific application and the desired form of user interaction.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework. These frameworks offer comprehensive tools and libraries that facilitate the development, training, and deployment of machine learning models.

Embodiments of the subject matter described in this specification can be implemented in a computing system that includes a back end component, e.g., as a data server, a back-end server, or cloud-based infrastructure, or that includes a middleware component, e.g., an application server, a middleware server, or application programming interface (API), to facilitate communication and data exchange, or that includes a front end component, e.g., a client computer having a graphical user interface, a web browser, or an app through which a user can interact with an implementation of the subject matter described in this specification, or any combination of one or more such back end, middleware, or front end components. For instance, the described functionality could be implemented solely on a client device (e.g., for on-device machine learning) or deployed as a combination of front-end and back-end components for more complex applications. The components of the system can be interconnected by any form or medium of digital data communication, e.g., a communication network. Examples of communication networks include a local area network (LAN) and a wide area network (WAN), e.g., the Internet. The specific system architecture and choice of components will depend on factors such as the scale of the application, the need for real-time processing, data security requirements, and the desired user experience.

The computing system can include clients and servers. A client and server are generally remote from each other, e.g., geographically separated, and typically interact through a communication network. The specific type of network, such as a local area network (LAN), a wide area network (WAN), or the Internet, will depend on the reach and scale of the application. The relationship of client and server arises by virtue of computer programs running on the respective computers and having a client-server relationship to each other, e.g., designed to communicate with each other using appropriate protocols. These protocols may include HTTP, TCP/IP, or other specialized protocols depending on the nature of the data being exchanged and the security requirements of the system. In some embodiments, a server transmits data, e.g., an HTML page, to a user device such as a computer, smartphone, or tablet, e.g., for purposes of displaying data to and receiving user input from a user interacting with the device, which acts as a client. The client device can then process the received information and display results to the user, and potentially send data or feedback back to the server. Data generated at the user device, e.g., a result of the user interaction, can be received at the server from the device, e.g., for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

This specification also includes the following clauses:

Clause 1. A method performed by one or more computers and for auto-regressively generating, using a neural network, an output sequence that includes a respective token from a vocabulary of tokens at each of a plurality of output time steps,

wherein the neural network comprises a sequence of layer blocks that each comprise a sequence of self-attention layers that includes a respective self-attention layer at each of a plurality of positions in the sequence of layers, and wherein, for each position of the plurality of positions, the respective self-attention layers at the position in each of the layer blocks share a first set of weights,
wherein the neural network is configured to:

receive a respective embedding for each input in an input sequence comprising a respective input at each of one or more input positions,
process the respective embeddings for the inputs in the input sequence through each layer block to generate a respective output embedding for each input in the input sequence, wherein each respective self-attention layer in each layer block is configured to:

obtain data derived from a respective input embedding for each input in the input sequence, and
generate a respective output embedding for at least a last input in the input sequence at least in part by applying an attention mechanism using the data derived from the respective input embeddings; and

process the output embedding for the last input in the input sequence to generate a probability distribution over the tokens in the vocabulary, and

wherein the method comprises:
generating the output sequence by, at each of the plurality of output time steps:

generating a current input sequence from at least the tokens at output time steps that precede the output time step in the output sequence;
generating a respective embedding for each input in the current input sequence;
processing the respective embeddings for the inputs in the current input sequence through one or more layer blocks in the sequence of layer blocks until a termination criterion is satisfied, comprising, for each of the one or more layer blocks starting from the first layer block in the sequence and until the termination criterion is satisfied:

for each self-attention layer in the layer block:

obtaining data derived from a respective input embedding for the respective self-attention layer for each input in the current input sequence, and

generate a respective output embedding for at least a last input in the current input sequence at least in part by applying an attention mechanism using the data derived from the respective input embeddings;

determining whether the termination criterion is satisfied;

in response to determining that the termination criterion is satisfied, processing the output embedding for the last input in the current input sequence generated by the respective self-attention layer at a last position in the layer block at which the termination criterion is satisfied to generate a probability distribution over the tokens in the vocabulary; and

selecting the token at the output time step using the probability distribution.

Clause 2. The method of clause 1, wherein the first set of weights for each self-attention layer comprises any one or more of: a key-value weight matrix, a query weight matrix, an output projection matrix, and a feed-forward weight matrix.

Clause 3. The method of any preceding clause, wherein each self-attention layer of each layer block comprises a respective second set of weights.

Clause 4. The method of clause 3, wherein the respective second set of weights for each self-attention layer of each layer block comprises a different set of weights.

Clause 5. The method of any of clauses 3-4, wherein the respective second set of weights for each self-attention layer comprises one or more weight update matrices to be combined with one or more weight matrices of the first set of weights for the self-attention layer.

Clause 6. The method of clause 5, wherein each respective second set of weights has been learned by training the neural network on a plurality of training examples, comprising training each respective second set of weights while holding the respective first sets of weights fixed.

Clause 7. The method of clause 6, wherein training each respective second set of weights comprises training a respective low-rank approximation of weights representative of updates to the neural network.

Clause 8. The method of clause 7, wherein training the respective low-rank approximation of weights comprises:

identifying a set of target update weights comprising a subset of weights of the first set of weights for the respective self-attention layer;

receiving a target rank specifying a dimensionality of the respective low-rank approximation of weights;

representing an update approximation for training updates to the target update weights using matrix decomposition in accordance with the target rank, wherein the matrix decomposition comprises a first matrix and a second matrix, each comprising values derived from a singular value decomposition of the respective first set of weights and a corresponding pre-trained set of weights;

updating the first and second matrix by training with a plurality of training examples to perform gradient updates in accordance with an objective function; and

generating an approximation of the target update weights using the respective low-rank approximation of weights as the respective second set of weights.

Clause 9. The method of clause 8, wherein the first matrix comprises values derived from right singular vectors of the singular value decomposition, and wherein the second matrix comprises values derived from left singular vectors and singular values of the singular value decomposition.

Clause 10. The method any preceding clause, wherein the first set of weights for each respective self-attention layer in each layer block is derived from one or more sets of weights for respective layers of a pre-trained neural network.

Clause 11. The method of clause 10, wherein the first set of weights for each respective self-attention layer in each layer block is initialized by combining two or more sets of weights for respective layers of the pre-trained neural network.

Clause 12. The method of clause 10, wherein the first set of weights for each respective self-attention layer in each layer block is initialized from a set of weights for a respective single layer of a pre-trained neural network.

Clause 13. The method of clause 12, wherein the first set of weights for the respective self-attention layer at a last position in each layer block is initialized from a set of weights for a last layer of the pre-trained neural network, and wherein the first set of weights for respective self-attention layers at one or more preceding positions is initialized from one or more sets of weights for respective single layers of the pre-trained neural network at a predetermined interval.

Clause 14. The method of any preceding clause, wherein the output sequence is conditioned on a network input, and wherein the method further comprises receiving the network input.

Clause 15. The method of clause 14, wherein the current input sequence further comprises one or more inputs corresponding to the network input.

Clause 16. The method of any preceding clause, wherein the output sequence generated using the neural network is one of a plurality of output sequences being generated by the neural network in parallel according to a maximum batch size, and wherein the neural network is further configured to:
while processing the respective embeddings for the inputs in respective current input sequences for the plurality of output sequences through each layer block after the first layer block until a termination criterion is satisfied, processing respective second embeddings for second inputs in respective second current input sequences for a second plurality of output sequences through each preceding layer block to generate a respective second output embedding for each second input, wherein the second plurality of output sequences comprises a number of output sequences such that a total number of input sequences being processed by the layer blocks is less than or equal to the maximum batch size.

Clause 17. The method of clause 16, wherein the second plurality of output sequences is part of a larger set of output sequences.

Clause 18. The method of any of clauses 16-17, further comprising:

in response to determining that the termination criterion is satisfied for one or more of the current input sequences, refraining from processing the respective embeddings for the inputs in the one or more current input sequences in subsequent layer blocks; and
processing respective third embeddings for third inputs in respective third current input sequences for a third plurality of output sequences through each preceding layer block to generate a respective third output embedding for each third input, wherein the third plurality of output sequences comprises a number of output sequences such that a total number of input sequences being processed by the layer blocks is less than or equal to the maximum batch size.

Clause 19. The method of any preceding clause, wherein determining whether the termination criterion is satisfied comprises determining whether the respective self-attention layer is the respective self-attention layer at a last position of a last layer block of the sequence of layer blocks.

Clause 20. The method of any of clauses 1-18, wherein determining whether the termination criterion is satisfied comprises determining whether a confidence score for the self-attention layer satisfies a threshold value.

Clause 21. The method of clause 20, wherein determining that the termination criterion is satisfied comprises determining that the confidence score for the self-attention layer is greater than or equal to the threshold value.

Clause 22. The method of any preceding clause, wherein processing the respective embeddings for the inputs through one or more layer blocks in the sequence of layer blocks comprises: once the termination criterion is satisfied, refraining from performing any processing for any respective self-attention layers in subsequent layer blocks in the sequence at the output time step.

Clause 23. A computer-implemented method comprising:

obtaining data specifying a pre-trained neural network, wherein the pre-trained neural network comprises a sequence of layers, and wherein the pre-trained neural network is configured to process, at each of multiple iterations, an input sequence of tokens for the iteration using each layer in the sequence of layers to generate an output sequence of tokens for the iteration;

identifying a subset of layers derived from the sequence of layers; and

generating a new neural network, wherein the new neural network comprises a plurality of layer blocks, wherein each layer block comprises a sequence of layers that includes a respective layer at each of a plurality of positions in the sequence of layers, wherein a respective first set of weights for the respective layers are derived from respective pre-trained sets of weights for the subset of layers, and wherein the new neural network is configured to process, at each of multiple iterations, an input sequence of tokens for the iteration using each layer block to generate an output sequence of tokens for the iteration.

Clause 24. The method of clause 23, wherein the new neural network is configured to process, at each of multiple iterations, an input sequence of tokens for the iteration using each layer block in accordance with the respective first set of weights for each layer.

Clause 25. The method of clause 23, wherein the subset of layers comprises a last layer of the sequence of layers, and one or more preceding layers of the sequence at a predetermined interval, and wherein the respective first sets of weights for the respective layers are initialized from the respective pre-trained sets of weights for the layers of the subset of layers.

Clause 26. The method of clause 23, wherein the subset of layers comprises two or more layers from the sequence of layers, and wherein the respective first set of weights for each respective layer is initialized by combining two or more of the respective pre-trained sets of weights for the layers of the subset of layers.

Clause 27. The method of any of clauses 23-26, wherein generating the new neural network further comprises training the new neural network on a plurality of training examples while tying the respective first set of weights for each respective layer at a same position in each layer block.

Clause 28. The method of any of clauses 23-27, wherein the new neural network is configured to process, at each of multiple iterations, an input sequence of tokens for the iteration using each layer block in accordance with a respective second set of weights for each layer.

Clause 29. The method of clause 28, wherein the respective second sets of weights are learned by training the new neural network on a second plurality of training examples while holding the respective first sets of weights fixed.

Clause 30. The method of clause 29, wherein each respective second set of weights is learned by training a respective low-rank approximation of weights representative of updates to the new neural network.

Clause 31. The method of clause 30, wherein training each of the respective low-rank approximation of weights comprises:

identifying a set of target update weights comprising a subset of weights of the new neural network;

receiving a target rank specifying a dimensionality of the respective low-rank approximation of weights;

representing an update approximation for training updates to the target update weights using matrix decomposition in accordance with the target rank, wherein the matrix decomposition comprises a first matrix and a second matrix, each comprising values derived from a singular value decomposition of one or more sets of weights for the sequence of layers, and one or more sets of weights for the respective layers;

updating the first and second matrix by training with a second plurality of training examples to perform gradient updates in accordance with an objective function; and

generating an approximation of the target update weights using the respective low-rank approximation of weights as the second set of weights.

Clause 32. The method of clause 31, wherein the first matrix comprises values derived from right singular vectors of the singular value decomposition, and wherein the second matrix comprises values derived from left singular vectors and singular values of the singular value decomposition.

Clause 33. The method of any of clauses 1-32 in which the output sequence is the result of performing a machine learning task on the input sequence, and:

(a) the input sequence comprises at least one of one or more of image data, audio data, video data; and

the output sequence comprises data describing content of the image data, audio data or video data;

(b) the input sequence comprises data defining a context, and the output sequence comprises image data, audio data or video data having content defined by the context;

(c) the input sequence comprises sensor data output by a sensor and describing a real-world environment, and the output sequence comprises control data for controlling an agent in the real-world environment described by the sensor data; or

(d) the input sequence comprises electronic health record data for a patient and the output sequence comprises a treatment suggestion, diagnosis or prognosis for the patient.

Clause 34. A system comprising:

one or more computers; and
one or more storage devices storing instructions that, when executed by the one or more computers, cause the one or more computers to perform the respective operations of any one of clauses 1-33.

Clause 35. One or more computer-readable storage media storing instructions that when executed by one or more computers cause the one or more computers to perform the respective operations of the method of any one of clauses 1-33.

**Claims**

1.  A method performed by one or more computers and for auto-regressively generating, using a neural network, an output sequence that includes a respective token from a vocabulary of tokens at each of a plurality of output time steps,

    wherein the neural network comprises a sequence of layer blocks that each comprise a sequence of self-attention layers that includes a respective self-attention layer at each of a plurality of positions in the sequence of layers, and wherein, for each position of the plurality of positions, the respective self-attention layers at the position in each of the layer blocks share a first set of weights,
    wherein the neural network is configured to:

    receive a respective embedding for each input in an input sequence comprising a respective input at each of one or more input positions,
    process the respective embeddings for the inputs in the input sequence through each layer block to generate a respective output embedding for each input in the input sequence, wherein each respective self-attention layer in each layer block is configured to:

    obtain data derived from a respective input embedding for each input in the input sequence, and
    generate a respective output embedding for at least a last input in the input sequence at least in part by applying an attention mechanism using the data derived from the respective input embeddings; and

    process the output embedding for the last input in the input sequence to generate a probability distribution over the tokens in the vocabulary, and

    wherein the method comprises:
    generating the output sequence by, at each of the plurality of output time steps:

    generating a current input sequence from at least the tokens at output time steps that precede the output time step in the output sequence;
    generating a respective embedding for each input in the current input sequence;
    processing the respective embeddings for the inputs in the current input sequence through one or more layer blocks in the sequence of layer blocks until a termination criterion is satisfied, comprising, for each of the one or more layer blocks starting from the first layer block in the sequence and until the termination criterion is satisfied:

    for each self-attention layer in the layer block:

    obtaining data derived from a respective input embedding for the respective self-attention layer for each input in the current input sequence, and
generate a respective output embedding for at least a last input in the current input sequence at least in part by applying an attention mechanism using the data derived from the respective input embeddings;

determining whether the termination criterion is satisfied;
in response to determining that the termination criterion is satisfied, processing the output embedding for the last input in the current input sequence generated by the respective self-attention layer at a last position in the layer block at which the termination criterion is satisfied to generate a probability distribution over the tokens in the vocabulary; and
selecting the token at the output time step using the probability distribution.

2. The method of claim 1, wherein the first set of weights for each self-attention layer comprises any one or more of: a key-value weight matrix, a query weight matrix, an output projection matrix, and a feed-forward weight matrix.

3. The method of any preceding claim, wherein each self-attention layer of each layer block comprises a respective second set of weights; and optionally

   (a) wherein the respective second set of weights for each self-attention layer of each layer block comprises a different respective set of weights; and/or
   (b) wherein the respective second set of weights for each self-attention layer comprises one or more weight update matrices which are combined with one or more weight matrices of the first set of weights for the self-attention layer, wherein optionally each respective second set of weights has been learned by training the neural network on a plurality of training examples, comprising training each respective second set of weights while holding the respective first sets of weights fixed, optionally wherein training each respective second set of weights comprises training a respective lower-rank approximation of weights representative of updates to the neural network, and optionally wherein training the respective lower-rank approximation of weights comprises:

      identifying a set of target update weights comprising a subset of weights of the first set of weights for the respective self-attention layer;
      receiving a target rank specifying a dimensionality of the respective lower-rank approximation of weights;
      representing an update approximation for training updates to the target update weights using matrix decomposition in accordance with the target rank, wherein the matrix decomposition comprises a first matrix and a second matrix, each comprising values derived from a singular value decomposition of the respective first set of weights and a corresponding pre-trained set of weights;
      updating the first and second matrix by training with a plurality of training examples to perform gradient updates in accordance with an objective function; and
      generating an approximation of the target update weights using the respective lower-rank approximation of weights as the respective second set of weights and optionally wherein the first matrix comprises values derived from right singular vectors of the singular value decomposition, and wherein the second matrix comprises values derived from left singular vectors and singular values of the singular value decomposition.

4. The method of any preceding claim, wherein the first set of weights for each respective self-attention layer in each layer block is derived from one or more sets of weights for respective layers of a pre-trained neural network; optionally wherein the first set of weights for each respective self-attention layer in each layer block is initialized by combining two or more sets of weights for respective layers of the pre-trained neural network; optionally wherein the first set of weights for each respective self-attention layer in each layer block is initialized from a set of weights for a respective single layer of a pre-trained neural network; optionally wherein the first set of weights for the respective self-attention layer at a last position in each layer block is initialized from a set of weights for a last layer of the pre-trained neural network, and wherein the first set of weights for respective self-attention layers at one or more preceding positions is initialized from one or more sets of weights for respective single layers of the pre-trained neural network at a predetermined interval.

5. The method of any preceding claim, wherein the output sequence is conditioned on a network input, and wherein the method further comprises receiving the network input; optionally wherein the current input sequence further comprises one or more inputs corresponding to the network input.

6. The method of any preceding claim, wherein the output sequence generated using the neural network is one of a plurality of output sequences being generated by the neural network in parallel according to a maximum batch size, and wherein the neural network is further configured to:

while processing the respective embeddings for the inputs in respective current input sequences for the plurality of output sequences through each layer block after the first layer block until a termination criterion is satisfied, processing respective second embeddings for second inputs in respective second current input sequences for a second plurality of output sequences through each preceding layer block to generate a respective second output embedding for each second input, wherein the second plurality of output sequences comprises a number of output sequences such that a total number of input sequences being processed by the layer blocks is less than or equal to the maximum batch size; optionally

(a) wherein the second plurality of output sequences is part of a larger set of output sequences; and/or
(b) further comprising:

in response to determining that the termination criterion is satisfied for one or more of the current input sequences, refraining from processing the respective embeddings for the inputs in the one or more current input sequences in subsequent layer blocks; and

processing respective third embeddings for third inputs in respective third current input sequences for a third plurality of output sequences through each preceding layer block to generate a respective third output embedding for each third input, wherein the third plurality of output sequences comprises a number of output sequences such that a total number of input sequences being processed by the layer blocks is less than or equal to the maximum batch size.

7. The method of any preceding claim, wherein determining whether the termination criterion is satisfied comprises determining whether the respective self-attention layer is the respective self-attention layer at a last position of a last layer block of the sequence of layer blocks.

8. The method of any of claims 1-6, wherein determining whether the termination criterion is satisfied comprises determining whether a confidence score for the self-attention layer satisfies a threshold value; optionally wherein determining that the termination criterion is satisfied comprises determining that the confidence score for the self-attention layer is greater than or equal to the threshold value.

9. The method of any preceding claim, wherein processing the respective embeddings for the inputs through one or more layer blocks in the sequence of layer blocks comprises: once the termination criterion is satisfied, refraining from performing any processing for any respective self-attention layers in subsequent layer blocks in the sequence at the output time step.

10. A computer-implemented method comprising:

obtaining data specifying a pre-trained neural network, wherein the pre-trained neural network comprises a sequence of layers, and wherein the pre-trained neural network is configured to process, at each of multiple iterations, an input sequence of tokens for the iteration using each layer in the sequence of layers to generate an output sequence of tokens for the iteration;

identifying a subset of layers derived from the sequence of layers; and

generating a new neural network, wherein the new neural network comprises a plurality of layer blocks, wherein each layer block comprises a sequence of layers that includes a respective layer at each of a plurality of positions in the sequence of layers, wherein a respective first set of weights for the respective layers are derived from respective pre-trained sets of weights for the subset of layers, and wherein the new neural network is configured to process, at each of multiple iterations, an input sequence of tokens for the iteration using each layer block to generate an output sequence of tokens for the iteration.

11. The method of claim 10, wherein:

(a) the new neural network is configured to process, at each of multiple iterations, an input sequence of tokens for the iteration using each layer block in accordance with the respective first set of weights for each layer;

(b) the subset of layers comprises a last layer of the sequence of layers, and one or more preceding layers of the sequence at a predetermined interval, and wherein the respective first sets of weights for the respective layers are initialized from the respective pre-trained sets of weights for the layers of the subset of layers; and/or

(c) the subset of layers comprises two or more layers from the sequence of layers, and

wherein the respective first set of weights for each respective layer is initialized by combining two or more of the respective pre-trained sets of weights for the layers of the subset of layers.

**12.** The method of claim 10 or claim 11, wherein:

(a) generating the new neural network further comprises training the new neural network on a plurality of training examples without modifying the respective first set of weights for each respective layer at a same position in each layer block; and/or

(b) the new neural network is configured to process, at each of multiple iterations, an input sequence of tokens for the iteration using each layer block in accordance with a respective second set of weights for each layer, optionally wherein the respective second sets of weights are learned by training the new neural network on a second plurality of training examples while holding the respective first sets of weights fixed, optionally wherein each respective second set of weights is learned by training a respective lower-rank approximation of weights representative of updates to the new neural network; optionally wherein training each of the respective lower-rank approximation of weights comprises:

identifying a set of target update weights comprising a subset of weights of the new neural network;
receiving a target rank specifying a dimensionality of the respective lower-rank approximation of weights;
representing an update approximation for training updates to the target update weights using matrix decomposition in accordance with the target rank, wherein the matrix decomposition comprises a first matrix and a second matrix, each comprising values derived from a singular value decomposition of one or more sets of weights for the sequence of layers, and one or more sets of weights for the respective layers;
updating the first and second matrix by training with a second plurality of training examples to perform gradient updates in accordance with an objective function; and
generating an approximation of the target update weights using the respective lower-rank approximation of weights as the second set of weights; and optionally wherein the first matrix comprises values derived from right singular vectors of the singular value decomposition, and wherein the second matrix comprises values derived from left singular vectors and singular values of the singular value decomposition.

**13.** The method of any of any preceding claim in which the output sequence is the result of performing a machine learning task on the input sequence, and:

(a) the input sequence comprises at least one of one or more of image data, audio data, video data; and the output sequence comprises data characterizing content of the image data, audio data or video data;
(b) the input sequence comprises data defining a context, and the output sequence comprises image data, audio data or video data having content defined by the context;
(c) the input sequence comprises sensor data output by a sensor and describing a real-world environment, and the output sequence comprises control data for controlling an agent in the real-world environment described by the sensor data; or
(d) the input sequence comprises electronic health record data for a patient and the output sequence comprises a treatment suggestion, diagnosis or prognosis for the patient.

**14.** A system comprising:

one or more computers; and
one or more storage devices storing instructions that, when executed by the one or more computers, cause the one or more computers to perform the respective operations of any preceding claim.

**15.** One or more computer-readable storage media storing instructions that when executed by one or more computers cause the one or more computers to perform the respective operations of the method of any one of claims 1-14.

EP 4 722 978 A1

NETWORK INPUT 102

TASK PERFORMANCE SYSTEM 100

INPUT SEQUENCE 104

NEURAL NETWORK
110

TERMINATION
CRITERION 106

LAYER BLOCKS 120a-b

SELF-ATTENTION
LAYERS 122a-k

FIG. 1

OUTPUT SEQUENCE 130

200

GENERATE A CURRENT INPUT SEQUENCE
202

GENERATE A RESPECTIVE EMBEDDING FOR EACH
INPUT IN THE CURRENT INPUT SEQUENCE
204

PROCESS THE RESPECTIVE EMBEDDINGS THROUGH
ONE OR MORE LAYER BLOCKS
206

FIG. 2A

FOR EACH OF ONE OR MORE LAYER BLOCKS: 206

FOR EACH SELF-ATTENTION LAYER IN THE LAYER BLOCK

OBTAIN DATA DERIVED FROM A RESPECTIVE INPUT EMBEDDING FOR THE RESPECTIVE SELF-ATTENTION LAYER FOR EACH INPUT IN THE CURRENT INPUT SEQUENCE
212

GENERATE A RESPECTIVE OUTPUT EMBEDDING FOR AT LEAST A LAST INPUT IN THE CURRENT INPUT SEQUENCE
214

TERMINATION CRITERION IS SATISFIED?
216

NO

YES

GENERATE A PROBABILITY DISTRIBUTION
218

SELECT THE TOKEN AT THE OUTPUT TIME STEP USING THE PROBABILITY DISTRIBUTION
220

FIG. 2B

**Vanilla Transformer**
310

**Recursive Transformer**
320

**Relaxed Recursive Transformer**
330

## FIG. 3

EP 4 722 978 A1

FIG. 4

EP 4 722 978 A1

(a) Vanilla Batching

510

(b) Depth-wise Batching

520

(c) With Early-exiting

530

FIG. 5

610

620

630

640

FIG. 6

PRE-TRAINED NEURAL NETWORK
702

LAYERS 706a-n

TRAINING SYSTEM 700

SUBSET OF LAYERS
710a-d

TRAINING ENGINE
720

NEW NEURAL NETWORK
110

TRAINING EXAMPLES
730

NEW NEURAL NETWORK
110

LAYER BLOCKS 120a-b

LAYERS 122a-k

WEIGHTS 724a-k

**FIG. 7**

800

OBTAIN DATA SPECIFYING A PRE-
TRAINED NEURAL NETWORK
802

IDENTIFY A SUBSET OF LAYERS
804

GENERATE A NEW NEURAL NETWORK
806

# FIG. 8

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nouriborji Mohammadmahdi ET AL: "MiniALBERT: Model Distillation via Parameter-Efficient Recursive Transformers", arXiv.org, 12 October 2022 (2022-10-12), XP093352344, Retrieved from the Internet: URL:https://arxiv.org/abs/2210.06425 * abstract; figures 1, 2 * * Sections 2.4, 3-3.4 * | 1-15 | INV. G06N3/045 |
| A | SHEN ZHIQIANG ET AL: "Sliced Recursive Transformer", 9 November 2021 (2021-11-09), SPRINGER INTERNATIONAL PUBLISHING, PAGE(S) 727 - 744, XP047639127, * abstract; figures 2, 4 * * Sections 3, 5.2 * | 1-15 | |
| A | US 2024/020516 A1 (SCHUSTER TAL [US] ET AL) 18 January 2024 (2024-01-18) * abstract; figures 1-3 * * paragraphs [0005] - [0009], [0053], [0060] - [0063], [0071] - [0082] * | 1-15 | **TECHNICAL FIELDS SEARCHED (IPC)** G06N |
| X,P | SANGMIN BAE ET AL: "Relaxed Recursive Transformers: Effective Parameter Sharing with Layer-wise LoRA", ARXIV.ORG, CORNELL UNIVERSITY LIBRARY, 201 OLIN LIBRARY CORNELL UNIVERSITY ITHACA, NY 14853, 28 October 2024 (2024-10-28), XP091919661, * the whole document * | 1-15 | |

The present search report has been drawn up for all claims

| Place of search | Date of completion of the search | Examiner |
|---|---|---|
| The Hague | 5 February 2026 | Houtgast, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6193

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | Publication date | Patent family member(s) | | Publication date |
|---|---|---|---|---|
| US 2024020516 A1 | 18-01-2024 | CN | 119404193 A | 07-02-2025 |
| | | EP | 4529649 A1 | 02-04-2025 |
| | | US | 11886976 B1 | 30-01-2024 |
| | | US | 2024169184 A1 | 23-05-2024 |
| | | WO | 2024015591 A1 | 18-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63702137

**Non-patent literature cited in the description**

- **GEMINI TEAM et al.** Gemini: a family of highly capable multimodal models. *arXiv preprint arXiv:2312.11805*, 2023
- **GEMMA TEAM et al.** Gemma: Open Models Based on Gemini Research and Technology. *arXiv preprint arXiv:2403.08295*
- **CHOWDHERY et al.** PaLM: Scaling Language Modeling with Pathways. *arXiv preprint arXiv:2204.02311*
- **VASWANI et al.** Attention is all you need. *31st Conference on Neural Information Processing Systems (NIPS 2017), Long Beach, CA, USA*, 2017
- **HU, E. et al.** Lora: Low-rank adaptation of large language models. *arXiv:2106.09685*, 2021
- **HOULSBY, N. et al.** Parameter-efficient transfer learning for NLP. *arXiv:1902.00751*, 2019